Europäisches Patentamt

European Patent Office

Office européen des brevets

(19)

(11) **EP 1 318 933 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(21) Anmeldenummer: **01967336.7**

(22) Anmeldetag: **13.09.2001**

(51) Int Cl.⁷: **B60T 8/00**, B60T 8/26, B60T 8/32

(86) Internationale Anmeldenummer:
**PCT/EP2001/010591**

(87) Internationale Veröffentlichungsnummer:
**WO 2002/022417 (21.03.2002 Gazette 2002/12)**

(54) **VERFAHREN ZUR REGELUNG DER BREMSKRAFT AN DEN RÄDERN EINES EINSPURIGEN FAHRZEUGS UND BREMSANLAGE ZUR DURCHFÜHRUNG DES VERFAHRENS**

METHOD FOR REGULATING THE BRAKE POWER ON THE WHEELS OF A SINGLE-TRACK VEHICLE AND BRAKE SYSTEM FOR CARRYING OUT SAID METHOD

PROCEDE POUR LA REGULATION DE LA FORCE DE FREINAGE AU NIVEAU DES ROUES D'UN VEHICULE A ROUES ALIGNEES ET SYSTEME DE FREINAGE POUR L'EXECUTION DE CE PROCEDE

(84) Benannte Vertragsstaaten:
**AT BE CH CY DE DK ES FI FR GB GR IE IT LI LU MC NL PT SE TR**

(30) Priorität: **13.09.2000 DE 10045541**

(43) Veröffentlichungstag der Anmeldung:
**18.06.2003 Patentblatt 2003/25**

(73) Patentinhaber: **FTE automotive GmbH & Co. KG 96106 Ebern (DE)**

(72) Erfinder:
• **HEUBNER, Wilhelm**
  **96274 Itzgrund-Kaltenbrunn (DE)**
• **HINRICHSEN, Lutz-Gunter**
  **90763 Fürth (DE)**
• **OBERLACK, Norbert**
  **91315 Höchstadt (DE)**
• **DRESCHER, Walter**
  **96106 Ebern (DE)**

(74) Vertreter: **Oppermann, Mark, Dipl.-Ing.**
**Oppermann & Oppermann**
**Patentanwälte**
**Am Wiesengrund 35**
**63075 Offenbach (DE)**

(56) Entgegenhaltungen:

**EP-A- 0 687 621**     **EP-A- 0 761 520**
**WO-A-92/00212**      **DE-A- 3 011 138**
**DE-A- 19 504 295**    **DE-A- 19 812 554**
**DE-A- 19 951 535**    **US-A- 4 790 606**

• **PATENT ABSTRACTS OF JAPAN vol. 1999, no. 05, 31. Mai 1999 (1999-05-31) & JP 11 034833 A (NIPPON ABS LTD), 9. Februar 1999 (1999-02-09)**
• **PATENT ABSTRACTS OF JAPAN vol. 1999, no. 04, 30. April 1999 (1999-04-30) & JP 11 005580 A (NISSIN KOGYO KK), 12. Januar 1999 (1999-01-12)**
• **"Das neue Integral ABS von BMW Motorrad" ATZ AUTOMOBILTECHNISCHE ZEITSCHRIFT, FRANCKH'SCHE VERLAGSHANDLUNG STUTTGART, DE, Bd. 103, Nr. 3, März 2001 (2001-03), Seiten 200-208, XP002186325**

**Beschreibung**

TECHNISCHES GEBIET

Die vorliegende Erfindung bezieht sich auf ein Verfahren zur Regelung der Bremskraft an den Rädern eines einspurigen Fahrzeugs sowie auf eine Bremsanlage zur Durchführung des Verfahrens. Insbesondere bezieht sich die Erfindung auf eine Bremsanlage für Motorräder, bei der beide Räder unabhängig voneinander mit dem bestmöglichen Kraftschluß nahe oder auf der idealen Bremskraftverteilungskurve gebremst werden können.

STAND DER TECHNIK

Fahrzeuge jeglicher Ausführung, ob ein- oder mehrspurig, verändern bei Brems- und Beschleunigungsvorgängen aufgrund der physikalischen Gegebenheiten und ihrer konstruktiven Merkmale die Lasten an Hinterachse und Vorderachse. Die Folge sind Kraftschlußdifferenzen und somit unterschiedliche Bremswirkungen bei gleichbleibenden Bremskräften an den Hinter- und Vorderrädern. Diese Kraftschlußdifferenzen können aufgrund des sich verändernden, geringeren Lastanteils während eines Bremsvorgangs am Hinterrad eine Überbremsung und in Folge eine Blockierung bewirken, noch bevor die maximale Bremskraft für einen Verzögerungsvorgang an den Vorderrädern erreicht und effektiv ausgenutzt werden kann. Das bedingt Spurinstabilität und kann Schleudern oder auch Ausbrechen des Fahrzeugs in der jeweiligen Phase nach sich ziehen. Es ist somit selbst geübten Fahrer oft nicht mehr möglich, die Kontrolle über das Fahrzeug, insbesondere das Motorrad, beizubehalten.

Um diesem Sachverhalt Rechnung zu tragen, wurden in hydraulischen Bremsanlagen im Kraftfahrzeugbau für die Hinterachse Druckbegrenzungsvorrichtungen, Druckregler, lastabhängige Druckregler (z.B. DE-C-29 10 960), Druckreduzierventile, Kombinationen aus den vorgenannten Bauteilen (z.B. EP-B-0 451 555) und mittlerweile elektronisch geregelte ABS, ASR und Fahrdynamikregelanlagen eingesetzt.

Bei den erstgenannten Bauteilen sind Nachteile darin zu sehen, daß selbst bei lastabhängigen Druckreglern ein deutlicher Abstand zwischen der bauteilspezifischen, gestuften Kennung und der idealen Kennlinie für die Bremskraftverteilung eingehalten werden muß, um zum einen die Toleranzen der Radbremsanlage aufzufangen und zum anderen dem Einfluß der Schwerpunktshöhe, der mit den üblichen Lastsensierungsmethoden nicht erfaßt werden kann, vorzubeugen -- siehe z.B. in der EP-B-0 451 555 die Fig. 2, 11, 20, 21 und 26.

Gleiches gilt für Schaltungen, wie sie z.B. aus der EP-B-0 623 079 bekannt geworden sind, bei denen mit Betätigung der Hinteroder Vorderradbremse zwar beide Räder gleichzeitig aktiviert werden, eine gleichmäßige Kraftschlußausnutzung aus den vorgenannten Gründen aber nicht möglich ist.

Bei bereits mit ABS ausgerüsteten, d.h. blokkiergeschützten einspurigen Fahrzeugen ist zwar jeder Achse und damit jedem Rad ein ABS-Modulator zum Erreichen der besten Bremsverzögerung zugeordnet, was ABS-Regel-Bremsungen auf der idealen Kennung erlaubt, jedoch hängt der minimal erreichbare Bremsweg bei solchen Anlagen (z.B. DE-C-35 30 280, DE-C-35 30 286, DE-C-36 03 074) aufgrund der getrennten Aktivierbarkeit der ABS-Modulatoren stark von dem Gefühl und dem Geschick des Fahrers ab, jeweils beide Modulatoren möglichst gleichzeitig zu betätigen. Zudem wird die Idealkennlinie nur im ABS-Fall erreicht; bei Verzögerungen deutlich unterhalb der Stabilitätsgrenze haben derartige Anlagen keine Vorteile gegenüber ungeregelten Bremsanlagen.

Weiterhin steht die übliche Verhaltensweise von Motorradfahrern, nur einen Bremskreis überwiegend zu betätigen, der Erzielung sowohl eines bestmöglichen Bremsweges als auch der gleichmäßigen Kraftschlußausnutzung an Vorderrad und Hinterrad entgegen. Eine diesbezügliche Verbesserung brachte die aus der EP-B-0 761 520 der Anmelderin bekannte Schaltung (Teilintegralschaltung), bei der mit Betätigung des Regelventils (= ABS-Modulator) am Vorderrad automatisch der ABS-Modulator am Hinterrad aktiviert wird. Jedoch werden selbst bei dieser verbesserten, den Fahrer entlastenden Schaltungsanordnung einer mit ABS ausgerüsteten Fremdkraftbremsvorrichtung bremsenzustandsabhängige Größen nicht mit berücksichtigt, so daß eine optimale Kraftschlußausnutzung für eine bestmögliche Verzögerung unter Ausschluß der Einflußnahme durch den Fahrer nicht möglich ist.

Die beschriebenen Nachteile wirken sich insbesondere bei Motorrädern auf die Fahrsicherheit gravierend aus, weil

sich hier sowohl die statischen als auch die dynamischen Achslasten deutlich stärker als bei einem PKW verändern können,

das Verhältnis von zulässigem Gesamtgewicht zu Leergewicht höher ist, und

das Verhältnis von Schwerpunktshöhe zum Radstand deutlich größer ist und sich stärker als bei einem PKW mit dessen kleinen Radlastschwankungen und großer Schwingungsdämpferkraft verändert, was trotz einer kleineren Achsmasse des Motorrades dessen Fahrverhalten in der Kurve stark beeinträchtigt.

Als nachteilig bei Fahrdynamikregelanlagen wird des weiteren die übliche digitale Druckregelung mit Schaltventilen und deren Lastwechselstößen angesehen, die speziell in der Anwendung bei Motorrädern Unruhe im Fahrwerk erzeugen würden.

Ferner offenbart die DE-A-199 51 535 eine Bremsanordnung für ein Motorrad, welche eine hydraulisch betätigte Vorderradbremse und eine hydraulisch betätigte Hinterradbremse aufweist. Die Vorderradbremse und die Hinterradbremse haben jeweils einen Bremssattel mit drei Kolben, von denen ein Kolben unabhängig von den zwei anderen Kolben hydraulisch beaufschlagt werden kann. Der eine Kolben der Vorderradbremse kann von einem mittels eines Bremshebels betätigbaren Hebel-Hauptzylinder über einen ersten ABS-Druckmodulator mit einem Hydraulikdruck beaufschlagt werden, während der eine Kolben der Hinterradbremse von einem mittels eines Bremspedals betätigbaren Pedal-Hauptzylinder über einen zweiten ABS-Druckmodulator mit einem Hydraulikdruck beaufschlagt werden kann. An den Leitungsabschnitten zwischen dem Hebel-Hauptzylinder und dem ersten ABS-Druckmodulator und zwischen dem Pedal-Hauptzylinder und dem zweiten ABS-Druckmodulator ist jeweils ein Drucksensor vorgesehen, mittels dessen der im Hebel-Hauptzylinder bzw. Pedal-Hauptzylinder erzeugte Betätigungsdruck erfaßt werden kann. Die Drucksensoren sind mit einer elektronischen Steuereinheit (ECU) verbunden, über die ein erster hydraulisch gesteuerter Aktuator und ein zweiter hydraulisch gesteuerter Aktuator ansteuerbar sind. Der erste Aktuator ist Bestandteil eines weiteren Hydraulikkreises zur hydraulischen Beaufschlagung der zwei anderen Kolben des Bremssattels der Vorderradbremse, während der zweite Aktuator Bestandteil eines weiteren Hydraulikkreises ist, der der hydraulischen Beaufschlagung der zwei anderen Kolben des Bremssattels der Hinterradbremse dient.

Wenn das Bremspedal unabhängig betätigt wird, wirkt ein Hydraulikdruck von dem Pedal-Hauptzylinder über den zweiten ABS-Druckmodulator auf den einen Kolben des Bremssattels der Hinterradbremse und das Hinterrad wird gebremst. Gleichzeitig erfaßt der entsprechende Drucksensor den Pedalbetätigungsdruck und gibt ihn an die ECU aus. Die ECU führt dann auf der Basis dieses Erfassungssignals eine Berechnung durch und gibt ein Steuersignal an die Aktuatoren aus, welche die zwei anderen Kolben des Bremssattels der Hinterradbremse und die zwei anderen Kolben des Bremssattels der Vorderradbremse in einer geeigneten Weise der Verteilung und einer bestimmten Zeitgebung hydraulisch beaufschlagen, um das Vorderrad und das Hinterrad zu bremsen. Genauer gesagt kommt, wenn das Bremspedal betätigt wird, zuerst die Bremse mit dem Hinterrad in Kontakt, und beim weiteren Niederdrücken des Pedals wird der Hydraulikdruck der hinteren Bremse erhöht, und wenn er einen festgesetzten Wert übersteigt, kommt die Bremse unter Verwendung des weiteren Hydraulikkreises, der den ersten Aktuator aufweist, mit dem Vorderrad in Kontakt. Hindurch soll ein Bremsnicken des Motorrads zum Zeitpunkt der Bremsung verhindert werden.

Wenn der Bremshebel unabhängig betätigt wird, wirkt von dem Hebel-Hauptzylinder über den ersten ABS-Druckmodulator Hydraulikdruck auf den einen Kolben des Bremssattels der Vorderradbremse und das Vorderrad wird gebremst. Gleichzeitig erfaßt der entsprechende Drucksensor den Hebelbetätigungsdruck und gibt ihn an die ECU aus. Dann wird auf der Basis dieses Erfassungssignals Hydraulikdruck zu den zwei anderen Kolben des Bremssattels der Vorderradbremse und zu den zwei anderen Kolben des Bremssattels der Hinterradbremse durch Steuerung des ersten bzw. des zweiten Aktuators geleitet, und die Bremskraft wirkt in einer geeigneten Weise der Verteilung und einer bestimmten Zeitgebung auf das Vorderrad und das Hinterrad. Wenn nun in diesem Zustand noch eine Einwirkung auf das Bremspedal erfolgt, wird der Hinterradbremse vom Pedal-Hauptzylinder über den zweiten ABS-Druckmodulator Hydraulikdruck zugeführt, der zusätzlich auf das Hinterrad wirkt. Um hier ein frühzeitiges Blockieren des Hinterrads zu verhindern, wird sodann der im weiteren, den zweiten Aktuator aufweisenden Hydraulikkreis erzeugte Bremskraftanteil entsprechend reduziert.

Diese vorbekannte Bremsanordnung hat mit ihren zwei Bremskreisen pro Rad einen verhältnismäßig komplizierten Aufbau. Auch die Ansteuerung der Bremskreise ist komplex. Außerdem ist eine bestmögliche Ausnutzung des Kraftschlusses zwischen Reifen und Untergrund insbesondere im Fall der Betätigung nur des Bremspedals nicht möglich, weil in diesem Fall in Abhängigkeit von der Höhe des Pedalbetätigungsdrucks am Vorderrad überhaupt keine Bremswirkung oder erst zeitlich verzögert erzeugt wird.

Ein ähnlich aufwendiges Bremssystem für Motorräder ist schließlich der EP-A-0 687 621 zu entnehmen. Gemäß diesem Stand der Technik sind am Vorderrad zwei Bremsen mit jeweils einem Bremssattel vorgesehen, während dem Hinterrad eine Bremse mit einem Bremssattel zugeordnet ist, wobei jeder Bremssattel drei Kolben aufweist. Zur Ansteuerung des Bremssystems ist zum einen ein mittels eines Bremshebels betätigbarer Hebel-Hauptzylinder und zum anderen ein mittels eines Bremspedals betätigbarer Pedal-Hauptzylinder vorgesehen. Wenn nur der Bremshebel betätigt wird, ohne daß das Bremspedal betätigt wird, werden die Vorderradbremsen und die Hinterradbremse von dem Hebel-Hauptzylinder angesteuert. Wird hingegen nur das Bremspedal betätigt, ohne daß der Bremshebel betätigt wird, werden, wenn die Betätigungskraft am Bremspedal relativ klein ist, die Hinterradbremse und lediglich eine der Vorderradbremsen von dem Pedal-Hauptzylinder angesteuert oder, wenn die Betätigungskraft am Bremspedal relativ groß ist, die Hinterradbremse und beide Vorderradbremsen. Hierzu ist der Hebel-Hauptzylinder mit zwei Kolben jeder Vorderradbremse direkt wirkverbunden. Ferner ist die eine Vorderradbremse mit einem Hilfs-Hauptzylinder ausgerüstet, mittels dessen ein Hydraulikdruck durch die Bremsreaktion, die gemäß der Betätigung dieser Vorderradbremse erzeugt wird, erzeugbar ist. Der Hilfs-Hauptzylinder ist wiederum über eine Druckreduziereinrichtung mit zwei Kolben der Hinterradbremse wirkverbunden. Schließlich ist der Pedal-Hauptzylinder direkt mit dem dritten Kolben der Hinterradbremse sowie dem dritten Kolben der Vorderradbremse wirkverbunden, der der Hilfs-Hauptzylinder zugeordnet ist, während eine Wirkverbindung mit dem dritten Kolben der anderen Vorderradbremse über eine Drucksteuereinrichtung erfolgt.

Der Erfindung liegt dem geschilderten Stand der Technik gegenüber die Aufgabe zugrunde, ein Verfahren zur Regelung der Bremskraft an den Rädern eines einspurigen Fahrzeugs anzugeben, welches bei einem Bremsvorgang in automatisierter Weise die bestmögliche Ausnutzung des Kraftschlusses zwischen Reifen und Untergrund ermöglicht, sowie eine einfach aufgebaute Bremsanlage zur Durchführung des Verfahrens zu schaffen.

Diese Aufgabe wird durch die im Patentanspruch 1 bzw. 6 angegebenen Merkmale gelöst. Vorteilhafte bzw. zweckmäßige Weiterbildungen der Erfindung sind Gegenstand der Patentansprüche 2 bis 5 und 7 bis 12.

DARSTELLUNG DER ERFINDUNG

Erfindungsgemäß wird bei einem Verfahren zur Regelung der Bremskraft an den Rädern eines einspurigen Fahrzeugs unter Verwendung einer Bremsanlage, die nur einen Radbremskreis mit einem Druckmodulator zur Einstellung des Bremsdrucks an einer Vorderradbremse, nur einen Radbremskreis mit einem Druckmodulator zur Einstellung des Bremsdrucks an einer Hinterradbremse, wenigstens einen Steuerkreis zur Ansteuerung beider Druckmodulatoren sowie eine Steuereinheit aufweist, der Bremsdruck $p_{HRsoll}$ im Radbremskreis für das Hinterrad in Abhängigkeit von dem im Radbremskreis für das Vorderrad mittels eines Drucksensors erfaßten Bremsdruck $p_{VRist}$ als Führungsgröße unter Zugrundelegung einer in der Steuereinheit abgelegten idealen Bremskraftverteilungscharakteristik ermittelt und durch den Druckmodulator im Radbremskreis für das Hinterrad eingestellt.

Im Ergebnis wird bei einer Teilintegral-Bremsanlage oder einer Vollintegral-Bremsanlage mit dem Bremsdruck im Vorderradbremskreis als Führungsgröße der Bremsdruck im Hinterradbremskreis automatisch entsprechend der idealen Bremskraftverteilung ermittelt und eingestellt, so daß eine optimierte Ausnutzung des Kraftschlusses zwischen Reifen und Untergrund erfolgt.

Bei dem erfindungsgemäßen Verfahren kann die in der Steuereinheit abgelegte Bremskraftverteilungscharakterisitik vorteilhaft zwei ideale Bremskraftverteilungskurven umfassen, von denen die eine Kurve repräsentativ für ein unbeladenes Fahrzeug ist, während die andere Kurve repräsentativ für ein maximal beladenes Fahrzeug ist.

Vorzugsweise wird ferner ein für die tatsächliche Beladung des Fahrzeugs repräsentativer Zähler gebildet, der für einen im Radbremskreis für das Vorderrad erfaßten Bremsdruck $p_{VRist}$ unter Berücksichtigung der beiden idealen Bremskraftverteilungskurven der Berechnung einer Druckberechnungsgröße dient, die entsprechend der tatsächlichen Beladung des Fahrzeugs zwischen den oder auf einer der beiden idealen Bremskraftverteilungskurven liegt, wobei der Bremsdruck $p_{HRsoll}$ für das Hinterrad in Abhängigkeit von der berechneten Druckberechnungsgröße ermittelt wird.

Bei einer vorteilhaften, optionalen Weiterbildung der Erfindung wird bei der Ermittlung des Bremsdrucks $p_{HRsoll}$ für das Hinterrad die gemessene oder berechnete Temperatur der Hinterradbremsscheibe dergestalt mit berücksichtigt, daß der Bremsdruck $p_{HRsoll}$ für das Hinterrad bei Überschreiten bestimmter Temperaturgrenzen abgesenkt wird.

Nach einem bevorzugt verwendeten Temperaturmodell werden bei der Berechnung der Temperatur der Bremsscheibe mit Zündung "EIN" stets zwei Temperaturfunktionen gebildet, von denen die eine Temperaturfunktion als Hilfsfunktion dient, die nach Zündung "AUS" und erneutem Zündung "EIN" stets bei dem zuletzt berechneten Temperaturwert wieder ansetzt, während die andere, den weiterverrechneten Temperaturwert liefernde Temperaturfunktion mit Zündung "EIN" stets wieder bei Null ansetzt, wobei letztere die Ergebnisse der ersten Temperaturfunktion dergestalt verrechnet, daß sie unter einer größeren Steigung verläuft, bis beide Temperaturfunktionen gleiche Ergebnisse liefern.

Vorrichtungsseitig sieht die Erfindung zur Durchführung des obigen Verfahrens eine Bremsanlage für einspurige Fahrzeuge vor, mit nur einem Radbremskreis für das Vorderrad, der einen Druckmodulator zur Einstellung eines an eine Vorderradbremse anlegbaren Bremsdrucks aufweist, nur einem Radbremskreis für das Hinterrad, der einen Druckmodulator zur Einstellung eines an eine Hinterradbremse anlegbaren Bremsdrucks aufweist, einem ersten Steuerkreis; mittels dessen beide Druckmodulatoren ansteuerbar sind, einem zweiten Steuerkreis, mittels dessen beide Druckmodulatoren ansteuerbar sind, und einer Steuereinheit, in der eine ideale Bremskraftverteilungscharakteristik zwischen Vorderrad und Hinterrad abgelegt ist und mittels der der Druckmodulator im Radbremskreis für das Hinterrad ansteuerbar ist, wobei im Radbremskreis für das Vorderrad ein Drucksensor vorgesehen ist, mittels dessen der Bremsdruck $p_{VRist}$ im Radbremskreis für das Vorderrad erfaßbar ist und der mit der Steuereinheit verbunden ist, wobei mittels des im Radbremskreis für das Vorderrad erfaßten Bremsdrucks $p_{VRist}$ als Führungsgröße unter Zugrundelegung der in der Steuereinheit abgelegten idealen Bremskraftverteilungscharakteristik ein Bremsdruck $p_{HRsoll}$ für den Radbremskreis für das Hinterrad ermittelbar ist, und wobei der ermittelte Bremsdruck $p_{HRsoll}$ für den Radbremskreis für das Hinterrad durch den von der Steuereinheit angesteuerten Druckmodulator im Radbremskreis für das Hinterrad einstellbar ist. Somit werden in vorteilhafter Weise auch stets beide Radbremskreise bei einer Bremsung aktiviert, was insgesamt zu einer besseren Bremswirkung führt.

In einer vorteilhaften Weiterbildung der Bremsanlage ist vorgesehen, daß jeder Druckmodulator einen Ventilkörper aufweist, der einen im Bremsbetrieb mit einem Druckmittel zwangsdurchströmten Drosselspalt ansteuerbar begrenzt, um in einer Druckkammer einen definierten Staudruck einzustellen, der der jeweiligen Radbremse anlegbar ist.

Es ist bevorzugt, wenn der Ventilkörper jedes Druckmodulators zur Einstellung des Drosselspalts über einen Steuerkolben hydraulisch und elektromagnetisch ansteuerbar ist. Dabei kann der Steuerkolben jedes Druckmodulators durch Druckbeaufschlagung einer Steuerkammer und/oder mechanische Beaufschlagung über einen in einer Ansteuerkammer gleitbeweglich geführten, über die Ansteuerkammer hydraulisch beaufschlagbaren Ansteuerkolben verschiebbar sein. Der Steuerkolben jedes Druckmodulators kann ferner mittels eines aus einem Anker am Steuerkolben und einer Magnetspule bestehenden Magnetantriebs verschiebbar sein.

In einer bevorzugten Ausgestaltung ist jeder Radbremskreis und jeder Steuerkreis mit einem Drucksensor versehen.

Stichpunktartig werden insbesondere die folgenden Vorteile des erfindungsgemäßen Verfahrens und der dafür vorgesehenen Bremsanlage gesehen:

Die Einführung einer wirksamen Integralbremse wird ermöglicht, wobei ein Ausschluß der individuellen Gewohnheiten des Fahrers erzielbar ist.

Der Fahrer des Fahrzeugs wird von der gefühlsmäßigen Einstellung der Bremskraftverteilung entlastet und kann sich somit mehr dem Verkehrsgeschehen widmen.

Beide Bremsen werden in Notsituationen wesentlich schneller über insbesondere den Handbremszylinder betätigt, was sich in einer Verkürzung des Bremswegs auswirkt. Dies trägt auch dem Umstand Rechnung, daß der überwiegend größte Teil der Zweiradfahrer vorwiegend nur eine Bremse nutzt.

Durch implizite Berücksichtigung der dynamischen Effekte kann die Abhebeneigung des Hinterrads reduziert werden.

Die gleichmäßige Kraftschlußausnutzung an beiden Rädern verbessert das Eigenlenkverhalten beim Bremsen in Kurven.

Fahrwerksunruhen beim Anbremsen und Bremsen werden reduziert.

Der Hinterradbremskreis wird bei Betätigung beider Bremsen nur anteilig belastet, wodurch thermische Überlastungen von Bremsscheibe, Bremsbelag und Bremssattel am Hinterrad nicht mehr auftreten.

Weitere Merkmale und Vorteile der Erfindung ergeben sich aus der folgenden Beschreibung.

KURZE BESCHREIBUNG DER ZEICHNUNGEN

Im folgenden wird die Erfindung anhand bevorzugter Ausführungsbeispiele unter Bezugnahme auf die beigefügten Zeichnungen näher erläutert. Darin zeigen:

Fig. 1     ein Schaltbild einer hydraulischen Teilintegral-Bremsanlage mit Antiblockierregelung (ABS) für Motorräder, zur Durchführung des erfindungsgemäßen Verfahrens;

Fig. 2     ein Schaltbild einer hydraulischen Vollintegral-Bremsanlage mit Antiblockierregelung (ABS) für Motorräder, zur Durchführung des erfindungsgemäßen Verfahrens;

Fig. 3     ein gleichermaßen für eine Teilintegral-Bremsanlage und eine Vollintegral-Bremsanlage geltendes Ablaufdiagramm, welches veranschaulicht, wie erfindungsgemäß in Abhängigkeit von dem Ist-Druck im Radbremskreis des Vorderrades der Soll-Druck für den Radbremskreis des Hinterrades ermittelt wird;

Fig. 4     ein Ablaufdiagramm, welches für den Fall einer Teilintegral-Bremsanlage veranschaulicht, wie der Beladungszustand des Motorrades bei der Ermittlung des Soll-Drucks für den Radbremskreis des Hinterrades gemäß Fig. 3 Berücksichtigung findet;

Fig. 5     ein Ablaufdiagramm, welches für den Fall einer Vollintegral-Bremsanlage veranschaulicht, wie der Beladungszustand des Motorrades bei der Ermittlung des Soll-Drucks für den Radbremskreis des Hinterrades gemäß Fig. 3 Berücksichtigung findet;

Fig. 6     ein zur Veranschaulichung des erfindungsgemäßen Verfahrens dienendes Diagramm, in dem der Druck im Radbremskreis des Hinterrades als Funktion des Drucks im Radbremskreis des Vorderrades aufgetragen ist, wobei ideale Bremskraftverteilungskurven für ein Motorrad ohne Beladung bzw. mit einer Grundbeladung und für ein maximal beladenes Motorrad angegeben sind, zwischen denen eine ideale Bremskraftverteilungskurve für einen bestimmten Fahrzustand gepunktet eingezeichnet ist;

Fig. 7     ein gleichermaßen für eine Teilintegral-Bremsanlage und eine Vollintegral-Bremsanlage geltendes Ablaufdiagramm, welches veranschaulicht, wie die mittels eines erfindungsgemäßen Temperaturmodells berechnete Bremsscheibentemperatur bei der Ermittlung des Soll-Drucks im entsprechenden Radbremskreis Berücksichtigung findet; und

Fig. 8     ein Diagramm, in dem die Temperatur als Funktion der Zeit aufgetragen ist und welches dazu dient, das erfindungsgemäße Temperaturmodell mit zwei rechnerisch ermittelten Temperaturkurven F1 und F2 zu veranschaulichen.

## DETAILLIERTE BESCHREIBUNG DER AUSFÜHRUNGSBEISPIELE

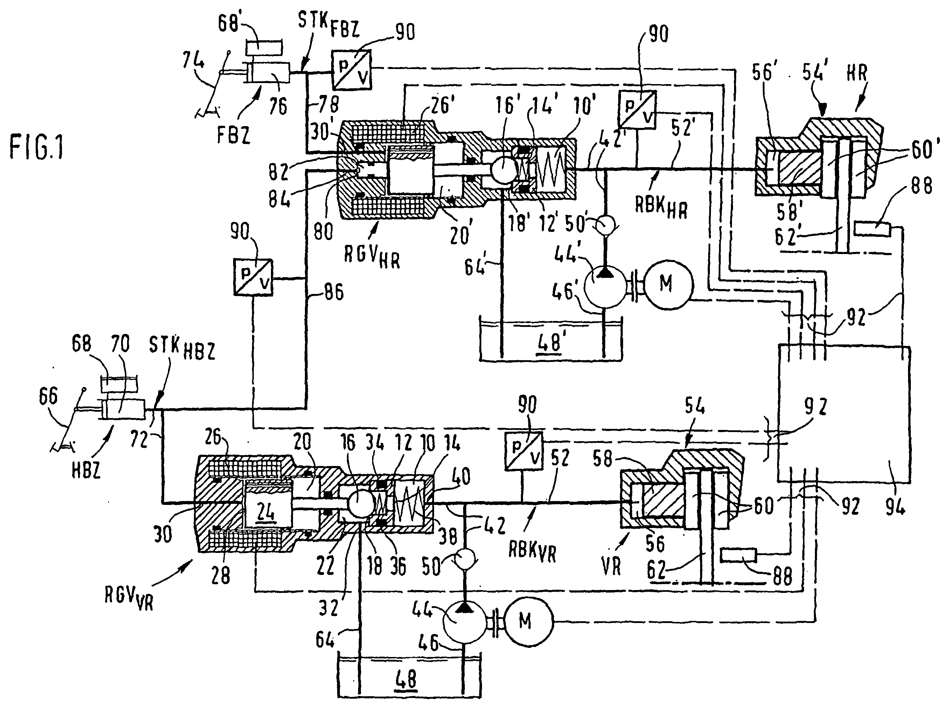

Die Fig. 1 zeigt die Teilintegral-Bremsanlage im unbetätigten Zustand. Die Teilintegral-Bremsanlage läßt sich grob unterteilen in einen Steuerkreis $STK_{HBZ}$, der einem Handbremszylinder HBZ zugeordnet ist, einen Steuerkreis $STK_{FBZ}$, welcher einem Fußbremszylinder FBZ zugeordnet ist, einem Radbremskreis $RBK_{VR}$ für das Vorderrad VR und einem davon getrennten Radbremskreis $RBK_{HR}$ für das Hinterrad HR. Zwischen den Steuerkreis $STK_{HBZ}$ und den Radbremskreis $RBK_{VR}$ ist ein Druckmodulator in Form eines Regelventils $RGV_{VR}$ geschaltet, während zwischen den Steuerkreis $STK_{FBZ}$ und den Radbremskreis $RBK_{HR}$ ein weiterer Druckmodulator in Form eines Regelventils $RGV_{HR}$ geschaltet ist, welches sich von dem Regelventil $RGV_{VR}$ unterscheidet. Das Regelventil $RGV_{VR}$ und das Regelventil $RGV_{HR}$ sind hinsichtlich Aufbau und Funktion prinzipiell aus der EP-B-0 761 520 der Anmelderin bekannt, auf die hiermit zunächst ausdrücklich verwiesen wird.

Die sehr kompakt bauenden Regelventile $RGV_{VR}$ und $RGV_{HR}$ zeichnen sich im wesentlichen dadurch aus, daß sie als Drosselventil ausgebildet sind, welches eine Druckkammer 10 aufweist, in der ein Ventilkolben 12 gleitbeweglich angeordnet ist. Der Ventilkolben 12 hat eine Durchgangsbohrung 14, an der er zusammen mit einem Ventilkörper 16 einen Drosselspalt 18 ausbildet. Der Drosselspalt 18 wird im fremdkraftunterstützten Bremsbetrieb von einem Druckmittel zwangsdurchströmt und ist durch Ansteuern des Ventilkörpers 16 verstellbar, so daß in der Druckkammer 10 ein definierter Staudruck erzeugt wird. Der Staudruck steht zur Erzeugung einer Bremskraft an dem Vorderrad VR bzw. dem Hinterrad HR im Radbremskreis $RBK_{VR}$ bzw. im Radbremskreis $RBK_{HR}$ an. Bei Ausfall der Fremdkraftunterstützung kann der Ventilkolben 12 über den Ventilkörper 16 in der Druckkammer 10 verschoben werden, wobei der Ventilkörper 16 die Durchgangsbohrung 14 verschließt, so daß in der Druckkammer 10 ein Restbremsdruck erzeugt wird.

Die Regelventile $RGV_{VR}$ und $RGV_{HR}$ haben jeweils ein dreikammeriges Ventilgehäuse, das neben der Druckkammer 10 eine Steuerkammer 20 und eine Ablaufkammer 22 begrenzt, die über eine Wandung des Ventilgehäuses voneinander getrennt sind. In der Steuerkammer 20 ist ein Steuerkolben 24 gleitbeweglich angeordnet, der hydraulisch bzw. für eine Antiblockierregelung (ABS) elektromagnetisch angesteuert in axialer Richtung der Steuerkammer 20 verschiebbar ist. Dazu besteht der Steuerkolben 24 aus einem in der Steuerkammer 20 geführten Anker und einem zentrisch zum Anker angeordneten Ventilbolzen, der sich mittels eines Dichtelements abgedichtet durch die Wandung zwischen Steuerkammer 20 und Ablaufkammer 22 hindurcherstreckt und in die Ablaufkammer 22 hineinragt. Der in der Wandung zwischen Steuerkammer 20 und Ablaufkammer 22 hydraulisch dicht geführte Ventilbolzen des Steuerkolbens 24 hat einen kleineren Durchmesser als der Anker des Steuerkolbens 24. Der Steuerkolben 24 kann in der Steuerkammer 20 im wesentlichen vollständig vom Druckmittel umspült werden, wozu im Anker des Steuerkolbens 24 eine Bohrung ausgebildet ist, welche die in Fig. 1 linke Seite des Ankers mit seiner in Fig. 1 rechten Seite verbindet.

In dem die Steuerkammer 20 radial umgebenden Abschnitt des Ventilgehäuses ist eine Magnetspule 26 angeordnet, die den Anker des Steuerkolbens 24 zumindest teilweise konzentrisch umgibt. Über den aus dem Anker des Steuerkolbens 24 und der Magnetspule 26 bestehenden Magnetantrieb kann das Regelventil $RGV_{VR}$ bzw. $RGV_{HR}$ zur Veränderung des Drosselspalts 18 unabhängig von der Betätigung des Handbremszylinders HBZ bzw. Fußbremszylinders FBZ angesteuert werden, wobei der Steuerkolben 24 axial verschoben wird. Der Magnetantrieb ist dazu mit einer entsprechenden, nahezu proportionalen Strom-Kraft-Charakteristik ausgeführt.

Auf der der Ablaufkammer 22 gegenüberliegenden Seite des Steuerkolbenankers ist bei dem in Fig. 1 dargestellten Regelventil $RGV_{VR}$ in der Steuerkammer 20 oder am Anker ein Anschlag 28 ausgebildet, der den Weg des Steuerkolbens 24 in der Steuerkammer 20 in Fig. 1 nach links begrenzt. Schließlich weist die Steuerkammer 20 einen Anschluß 30 auf, über den der Steuerkolben 24 hydraulisch angesteuert werden kann.

In der Ablaufkammer 22 ist der Ventilkörper 16 angeordnet, der als metallische Kugel ausgebildet ist, die über den sich abgedichtet durch die Wandung zwischen Steuerkammer 20 und Ablaufkammer 22 hindurcherstreckenden Ventilbolzen des Steuerkolbens 24 mechanisch mit einer Kraft beaufschlagt werden kann. Bei dem Ventilkörper 16 und dem Ventilbolzen des Steuerkolbens 24 handelt es sich um zwei separate Bauteile, so daß der Ventilkörper 16 über den Ventilbolzen des Steuerkolbens 24 nur mit einer Druckkraft beaufschlagt werden kann. Die Ablaufkammer 22 ist ferner mit einem Anschluß 32 versehen, über den das Druckmittel aus der Ablaufkammer 22 abfließen kann.

Zwischen Ablaufkammer 22 und Druckkammer 10 ist ein Absatz 34 vorgesehen, der einen ablaufkammerseitigen Anschlag für den in der Druckkammer 10 aufgenommenen und auf einer Achse mit dem Steuerkolben 24 liegenden Ventilkolben 12 ausbildet. An der die Ablaufkammer 22 mit der Druckkammer 10 hydraulisch verbindenden Durchgangsbohrung 14 des Ventilkolbens 12 ist ablaufkammerseitig ein ringförmiger Dichtsitz angebracht, der ebenso wie die Durchgangsbohrung 14 zentrisch zur Mittelachse des Ventilkolbens 12 ausgerichtet ist und zur Begrenzung des Drosselspalts 18 mit dem Ventilkörper 16 zusammenwirkt bzw. bei Ausfall der Fremdkraftunterstützung zur dichten Anlage mit dem Ventilkörper 16 kommt. In der Durchgangsbohrung 14 des Ventilkolbens 12 ist eine Rückstellfeder 36 aufgenommen, die sich an einer druckkammerseitigen Schulter des Ventilkolbens 12 abstützt und den Ventilkörper 16 gegen den Ventilbolzen des Steuerkolbens 24 drückt. Der Ventilkolben 12 ist an seinem Außenumfang mit einem Dichtelement versehen, so daß lediglich der Drosselspalt 18 die Druckkammer 10 mit der Ablaufkammer 22 über die Durchgangsbohrung 14 des Ventilkolbens 12 hydraulisch verbindet bzw. bei Ausfall der Fremdkraftunterstützung in der Druckkammer 10 ein Restbremsdruck erzeugt werden kann, nachdem der Ventilkörper 16 die Durchgangsbohrung 14 im Ventilkolben 12 an dessen Dichtsitz verschlossen hat.

In der Druckkammer 10 ist eine Kolbenfeder 38 aufgenommen, die den Ventilkolben 12 auf den Absatz 34 des Ventilgehäuses mit einer Kraft vorspannt, die größer ist als die Rückstellkraft der Rückstellfeder 36. Schließlich weist auch die Druckkammer 10 einen Anschluß 40 auf.

Das Regelventil $RGV_{VR}$ ist -- wie auch das Regelventil $RGV_{HR}$ -im nicht angesteuerten Zustand in Durchgangs-Null-Stellung geschaltet ist, in welcher der Ventilkolben 12 über die Kolbenfeder 38 gegen den Absatz 34 des Ventilgehäuses vorgespannt ist, während die sich an der Schulter des Ventilkolbens 12 abstützende Rückstellfeder 36 den Steuerkolben 24 über die Anlage zwischen Ventilkörper 16 und Ventilbolzen des Steuerkolbens 24 gegen den Anschlag 28 in der Steuerkammer 20 drückt, wobei der Drosselspalt 18 entgegen der Darstellung in Fig. 1 maximal geöffnet ist.

Das Regelventil $RGV_{VR}$ ist nun wie folgt in die Teilintegral-Bremsanlage geschaltet.

Die Druckkammer 10 des Regelventils $RGV_{VR}$ ist an ihrem Anschluß 40 über eine Druckleitung 42 hydraulisch an den Ausgang einer mittels eines Motors M angetriebenen Hydraulikpumpe 44 angeschlossen, deren Eingang über eine Ansaugleitung 46 mit einem Vorratsbehälter 48 für das Druckmittel verbunden ist, und die im fremdkraftunterstützten Bremsbetrieb die Zwangsdurchströmung des Drosselspalts 18 bewirkt. In die Druckleitung 42 ist ein Rückschlagventil 50 geschaltet, das verhindert, daß das Druckmittel in Richtung auf die Hydraulikpumpe 44 zurückfließen kann. Von der Druckleitung 42 zweigt zwischen dem Rückschlagventil 50 und der Druckkammer 10 des Regelventils $RGV_{VR}$ eine Druckleitung 52 ab, die zu einem als Zuspannorgan dienenden Bremssattel 54 führt.

Der Bremssattel 54, im dargestellten Ausführungsbeispiel ein Schwimmsattel, hat eine Kolben-Zylinder-Anordnung mit einer Druckkammer 56, in der ein Kolben 58 hydraulisch dicht geführt ist. Die Druckkammer 56 ist an die Druckleitung 52 angeschlossen, so daß der Kolben 58 mit dem mittels der Hydraulikpumpe 44 erzeugten und über das Regelventil $RGV_{VR}$ gesteuerten Staudruck beaufschlagt werden kann. Ferner ist der Bremssattel 54 mit Bremsbelägen 60 versehen, die bei Druckbeaufschlagung der Kolben-Zylinder-Anordnung über den Kolben 58 gegen eine Bremsscheibe 62 gepreßt werden.

Ferner ist die Ablaufkammer 22 des Regelventils $RGV_{VR}$ über eine Rücklaufleitung 64 mit dem Vorratsbehälter 48 verbunden.

Zur hydraulischen Ansteuerung des Regelventils $RGV_{VR}$ über den in der Steuerkammer 20 geführten Steuerkolben 24 dient schließlich der einkammerige Handbremszylinder HBZ, der mittels eines Handbremshebels 66 betätigt werden kann und eine im unbetätigten Zustand des Handbremszylinders HBZ mit einem Ausgleichsbehälter 68 verbundene Druckkammer 70 aufweist. Hierzu ist die Druckkammer 70 über eine Steuerleitung 72 an den Anschluß 30 des Regelventils $RGV_{VR}$ angeschlossen.

Im Ergebnis bilden die Hydraulikpumpe 44, die Druckleitung 42, das über die Rücklaufleitung 64 an den Vorratsbehälter 48 angeschlossene Regelventil $RGV_{VR}$, die Druckleitung 52 und die Kolben-Zylinder-Anordnung des Bremssattels 54 einen Fremdkraft-Radbremskreis $RBK_{VR}$ mit über den verschließbaren Ventilkolben 12 integrierter Restbremsfunktion aus, der mittels der Magnetspule 26 des Regelventils $RGV_{VR}$ elektromagnetisch oder über den vom Radbremskreis $RBK_{VR}$ hydraulisch getrennten hydraulischen Steuerkreis $STK_{HBZ}$ angesteuert werden kann, welcher aus dem Handbremszylinder HBZ, der Steuerleitung 72, der Steuerkammer 20 des Regelventils $RGV_{VR}$ und dessen Steuerkolben 24 besteht.

Im oberen Teil der Fig. 1 sind die dem Hinterrad HR zugeordneten Bestandteile Steuerkreis $STK_{FBZ}$, Regelventil $RGV_{HR}$ und Radbremskreis $RBK_{HR}$ der Teilintegral-Bremsanlage dargestellt, die nachfolgend nur insoweit beschrieben werden sollen, als sie sich von den dem Vorderrad VR zugeordneten Bestandteilen Handbremszylinder HBZ, Regelventil $RGV_{VR}$ und Radbremskreis $RBK_{VR}$ unterscheiden. Gleiche oder entsprechende Teile sind hier mit den gleichen Bezugszeichen, die mit einem Strich ergänzt sind, versehen. Auch der in Fig. 1 obere Teil der Teilintegral-Bremsanlage ist im unbetätigten Zustand dargestellt, wobei der Drosselspalt 18' des Regelventil $RGV_{HR}$ tatsächlich aber maximal geöffnet ist.

Der Fußbremszylinder FBZ des Steuerkreises $STK_{FBZ}$ ist gleichermaßen einkammerig und kann über einen Fußbremshebel 74 betätigt werden. An eine Druckkammer 76 des Fußbremszylinders FBZ ist über eine Steuerleitung 78 das Regelventil $RGV_{HR}$ angeschlossen, welches im wesentlichen wie das Regelventil $RGV_{VR}$ aufgebaut ist und arbeitet.

Das Regelventil $RGV_{HR}$ unterscheidet sich von dem Regelventil $RGV_{VR}$ lediglich dadurch, daß am steuerkammerseitigen Ende des Ventilgehäuses eine zusätzliche Ansteuerkammer 80 vorgesehen ist, in der ein Ansteuer- oder Integralkolben 82 gleitbeweglich aufgenommen ist. Mit dem Ansteuerkolben 82 wirkt ein Dichtelement zusammen, das die Ansteuerkammer 80 gegenüber der Steuerkammer 20' des Regelventils RGV$_{HR}$ abdichtet. Über den Ansteuerkolben 82 kann der damit in Reihe geschaltete Steuerkolben 24' mechanisch beaufschlagt werden, wenn in der Ansteuerkammer 80 ein Steuerdruck aufgebaut wird. Schließlich weist die Ansteuerkammer 80 einen Anschluß 84 auf, über den sie an eine Steuerleitung 86 angeschlossen ist, die von der Steuerleitung 72 des Steuerkreises STK$_{HBZ}$ abzweigt, so daß der Bremskreis am Hinterrad HR über den Bremskreis am Vorderrad VR mit angesteuert werden kann, was für eine Teilintegral-Bremsanlage kennzeichnend ist.

Zum Aufbau der in Fig. 1 dargestellten Teilintegral-Bremsanlage ist schließlich noch anzumerken, daß sowohl dem Vorderrad VR als auch dem Hinterrad HR jeweils ein Drehzahlsensor 88 zugeordnet ist. Ferner ist im Steuerkreis STK$_{HBZ}$, im Radbremskreis RBK$_{VR}$, im Steuerkreis STK$_{FBZ}$ und im Radbremskreis RBK$_{HR}$ jeweils ein Drucksensor 90 vorgesehen, um den jeweiligen Druck für die Bremsdruckregelung zu erfassen, wie noch näher beschrieben werden wird. Die Drehzahlsensoren 88 und die Drucksensoren 90 sind ebenso wie die Motoren M für die Hydraulikpumpen 44 und die Magnetspulen 26 der Regelventile RGV$_{VR}$ und RGV$_{HR}$ über Steuerleitungen 92 mit einer Steuereinheit 94 elektrisch verbunden. Zu den Drucksensoren 90 in den Steuerkreisen STK$_{HBZ}$ und STK$_{FBZ}$ sei an dieser Stelle noch angemerkt, daß diese Drucksensoren 90 in erster Linie zur Verbesserung der Regelgüte dienen und in sicherheitstechnischer Hinsicht eine kontinuierliche Leckageprüfung der Steuerkreise STK$_{HBZ}$ und STK$_{FBZ}$ gestatten.

Im folgenden wird die Funktionsweise der Teilintegral-Bremsanlage zunächst anhand der dem Vorderrad VR zugeordneten Bestandteile Steuerkreis STK$_{HBZ}$, Regelventil RGV$_{VR}$ und Radbremskreis RBK$_{VR}$ erläutert.

Durch Ziehen des Handbremshebels 66 baut sich in der Druckkammer 70 des Handbremszylinders HBZ ein Druck auf, der zu der auf den Handbremshebel 66 wirkenden Betätigungskraft proportional ist. Dieser Druck steht auch im hydraulischen Steuerkreis STK$_{HBZ}$ über die Steuerleitung 72 in der Steuerkammer 20 des Regelventils RGV$_{VR}$ als Steuerdruck an.

Der in der Steuerkammer 20 des Regelventils RGV$_{VR}$ anliegende Steuerdruck verschiebt nun den Steuerkolben 24 infolge der Druckbeaufschlagung der der Querschnittsfläche des Ventilbolzens entsprechenden hydraulischen Wirkfläche des Steuerkolbens 24 in Fig. 1 nach rechts und damit den am Steuerkolben 24 durch die Kraft der Rückstellfeder 36 anliegenden Ventilkörper 16 in Richtung auf den Dichtsitz an der Durchgangsbohrung 14 des Ventilkolbens 12. Diese hydraulische Ansteuerung des Regelventils RGV$_{VR}$ über den hydraulischen Steuerkreis STK$_{HBZ}$ ist sowohl im fremdkraftunterstützten Bremsbetrieb als auch bei Ausfall der Fremdkraftunterstützung dieselbe.

Im fremdkraftunterstützten Bremsbetrieb wird der die Hydraulikpumpe 44 antreibende Motor M mit Überschreiten eines vorbestimmten, mittels des zugeordneten Drucksensors 90 erfaßten Signaldrucks im hydraulischen Steuerkreis STK$_{HBZ}$ durch die Steuereinheit 94 gestartet. Ebenso könnte die Hydraulikpumpe 44 aber auch während der gesamten Gebrauchsdauer des Motorrads betrieben werden.

Die Hydraulikpumpe 44 saugt nun über die Ansaugleitung 46 das Druckmittel aus dem Vorratsbehälter 48 an und fördert es über das Rückschlagventil 50 und die Druckleitung 42 in die Druckkammer 10 des Regelventils RGV$_{VR}$. Von der Druckkammer 10 fließt das Druckmittel über die Durchgangsbohrung 14 im Ventilkolben 12 durch den Drosselspalt 18 in die Ablaufkammer 22 und von da über die Rücklaufleitung 64 zurück in den Vorratsbehälter 48. Da zu Beginn der Betätigung des Handbremshebels 66 der Steuerkolben 24 des Regelventils RGV$_{VR}$ und somit der Ventilkörper 16 nur geringfügig in Richtung auf den Dichtsitz am Ventilkolben 12 verschoben sind, so daß der Drosselspalt 18 fast vollständig geöffnet ist, wälzt die Hydraulikpumpe 44 das Druckmittel weitgehend drucklos über das Regelventil RGV$_{VR}$ um.

Der Ventilkörper 16 wird nun über den Ventilbolzen des hydraulisch beaufschlagten Steuerkolbens 24 entgegen der Kraft der Rückstellfeder 36 weiter in Richtung des Dichtsitzes am Ventilkolben 12 geschoben, und zwar mit einer Kraft, die gleich dem Produkt des in der Steuerkammer 20 durch den Handbremszylinder HBZ aufgebrachten Steuerdrucks und der durch die Querschnittsfläche des Ventilbolzens am Steuerkolben 24 bestimmten hydraulischen Wirkfläche des Steuerkolbens 24 ist. Bei Annäherung des Ventilkörpers 16 an den Dichtsitz des Ventilkolbens 12 verringert sich der Drosselspalt 18, wodurch sich der Durchflußquerschnitt für das durch die Hydraulikpumpe 44 über die Druckleitung 42 und die Druckkammer 10 umgewälzte Druckmittel verringert. Im Ergebnis wird im Radbremskreis RBK$_{VR}$ in Umlaufrichtung des Druckmittels vor dem Drosselspalt 18 ein Staudruck erzeugt, der sich über die Druckkammer 10, die Druckleitung 42 und die Druckleitung 52 bis zur Druckkammer 56 der Kolben-Zylinder-Anordnung des Bremssattels 54 fortpflanzt, so daß über den Kolben 58 der Kolben-Zylinder-Anordnung und die Bremsbeläge 60 eine Bremskraft an der Bremsscheibe 62 aufgebracht wird.

Soll im fremdkraftunterstützten Bremsbetrieb der Bremsdruck nun reduziert werden, so wird durch Entlasten des Handbremshebels 66 der Steuerdruck im Steuerkreis STK$_{HBZ}$ verringert und der Steuerkolben 24 des Regelventils RGV$_{VR}$ fährt zusammen mit dem Ventilkörper 16 unter Vergrößerung des Drosselspalts 18 in seine Ausgangsstellung zurück, wobei er gegen den abbauenden Steuerdruck in der Steuerkammer 20 über den Ventilkörper 16 durch den mit Vergrößerung des Drosselspalts 18 kleiner werdenden Staudruck des umlaufenden Druckmittels in der Druckkammer 10 und die Kraft der Rückstellfeder 36 belastet wird. Mit Unterschreitung des vorbestimmten Signaldrucks im Steuerkreis $STK_{HBZ}$ wird gegebenenfalls der Motor M der Hydraulikpumpe 44 abgeschaltet, so daß der Umlauf des Druckmittels beendet wird und der Bremsdruck auf Null abfällt.

Fällt die Fremdkraftunterstützung durch beispielsweise einen Ausfall der Hydraulikpumpe 44 im Radbremskreis $RBK_{VR}$ aus, so kann die erforderliche Restbremskraft über den Ventilkolben 12 aufgebracht werden. Dabei verschließt der über den hydraulisch beaufschlagten Steuerkolben 24 gegen die Kraft der Rückstellfeder 36 um den Schließweg des Drosselspalts 18 verschobene Ventilkörper 16 die Durchgangsbohrung 14 im Ventilkolben 12 am Dichtsitz hydraulisch dicht, so daß durch weiteres Verschieben des verschlossenen Ventilkolbens 12 über den Ventilkörper 16 und den Steuerkolben 24 in der Druckkammer 10 ein Restbremsdruck erzeugt wird. Der Restbremsdruck pflanzt sich über die Druckleitung 52 zur Kolben-Zylinder-Anordnung des Bremssattels 54 fort, so daß über den Kolben 58 und die Bremsbeläge 60 an der Bremsscheibe 62 eine Restbremskraft aufgebracht werden kann.

Im Falle einer Antiblockierregelung (ABS) arbeitet das Regelventil $RGV_{VR}$ wie folgt.

Das Prinzip einer Antiblockierregelung besteht darin, daß, wenn während eines Bremsvorgangs mit anstehendem Bremsdruck eine bestimmte Verzögerungsschwelle an einem gebremsten Rad überschritten wird, der Radbremsdruck soweit verringert wird, bis eine zweite Verzögerungsschwelle an diesem Rad unterschritten wird. Hierfür kann es notwendig sein, den anstehenden Radbremsdruck bis auf Null abzubauen. Danach wird der Radbremsdruck wieder erhöht, bis entweder das Rad erneut überbremst oder der vom Fahrer vorgegebene Bremsdruck erreicht wird. Dies wird dadurch erreicht, daß der Steuerkolben 24 des Regelventils $RGV_{VR}$ über dessen Anker und die Magnetspule 26 zusätzlich elektromagnetisch ansteuerbar ist.

Wenn im ABS-Fall der über den Radbremskreis $RBK_{VR}$ im Bremssattel 54 anliegende Radbremsdruck das Vorderrad VR überbremst, wird dies mittels der beschriebenen Sensorik in an sich bekannter Weise erkannt. Der Bremsdruck wird nun durch Ansteuerung des aus Steuerkolbenanker und Magnetspule 26 bestehenden Magnetantriebs geeignet eingestellt. Hierbei wirkt die magnetische Kraft auf den Anker des Steuerkolbens 24 in Fig. 1 nach links und damit entgegen der am Steuerkolben 24 wirkenden hydraulischen Kraft. Damit wird die resultierende Kraft, die vom Steuerkolben 24 über dessen Ventilbolzen auf den Ventilkörper 16 in Fig. 1 nach rechts wirkt, verringert. Im Extremfall kann die resultierende Kraft auf Null reduziert werden, indem die magnetische Kraft durch eine stufenlos regelbare Bestromung der Magnetspule 26 so groß gemacht wird, daß sie die durch den hydraulischen Steuerdruck aufgebrachte Kraft am Steuerkolben 24 kompensiert. In der Folge wird der durch die Rückstellfeder 36 und den anstehenden Staudruck belastete Ventilkörper 16 in Fig. 1 nach links in Richtung vom Dichtsitz am Ventilkolben 12 weg gedrückt und der Drosselspalt 18 vergrößert. Im Ergebnis wird der in der Druckkammer 56 des Bremssattels 54 über die Druckleitung 52 anstehende Staudruck verringert, bis die Verzögerungsschwelle unterschritten wird.

Danach wird die elektromagnetische Ansteuerung des Regelventils $RGV_{VR}$ verringert, so daß die resultierende Kraft, die vom Steuerkolben 24 über dessen Ventilbolzen auf den Ventilkörper 16 in Fig. 1 nach rechts wirkt, wieder ansteigt. In der Folge wird der Ventilkörper 16 in Fig. 1 nach rechts in Richtung des Dichtsitzes am Ventilkolben 12 gedrückt und der Drosselspalt 18 verringert. Dadurch wird der in der Druckkammer 56 des Bremssattels 54 über die Druckleitung 52 anstehende Staudruck wieder erhöht, bis das Vorderrad VR wieder überbremst wird bzw. der Drosselspalt 18 wie oben beschrieben wieder allein hydraulisch über den Steuerkreis $STK_{HBZ}$ eingestellt wird und im Bremssattel 54 durch den Radbremskreis $RBK_{VR}$ eine der Betätigungskraft proportionale Bremskraft aufgebracht wird. Es stellt sich ein Regelvorgang ein, der während der ABS-geregelten Bremsung andauert.

Was nun die in Fig. 1 oben dargestellten, dem Hinterrad HR zugeordneten Bestandteile Steuerkreis $STK_{FBZ}$, Regelventil $RGV_{HR}$ und Radbremskreis $RBK_{HR}$ der Teilintegral-Bremsanlage angeht, schiebt, wenn der Handbremszylinder HBZ betätigt wird, der gleichfalls über die Steuerleitungen 72 und 86 hydraulisch angesteuerte Ansteuerkolben 82 im Regelventil $RGV_{HR}$ dessen Steuerkolben 24' und somit den Ventilkörper 16' unter gleichzeitigem Anlaufen der Hydraulikpumpe 44' in Richtung auf den Dichtsitz an der Durchgangsbohrung 14' des Ventilkolbens 12', so daß durch Verkleinerung des Drosselspalts 18' in der Druckkammer 10' ein Staudruck erzeugt wird, der an dem Bremssattel 54' anliegt.

Werden bei einer Bremsung sowohl der Handbremszylinder HBZ als auch der Fußbremszylinder FBZ betätigt, so wird am Steuerkolben 24' des Regelventils $RGV_{HR}$ nur der größere Steuerdruck von beiden durch Druckbeaufschlagung der Steuerkammer 20' bzw. Kraftbeaufschlagung über den Ansteuerkolben 82 wirksam.

Ist der an den Bremssattel 54' des Radbremskreises $RBK_{HR}$ angelegte Bremsdruck so hoch, daß die Sensorik eine Blockierneigung am Hinterrad HR erkennt, so wird im Radbremskreis $RBK_{HR}$ eine Antiblockierregelung wie oben bereits beschrieben durchgeführt. Dabei zieht der aus Steuerkolbenanker und Magnetspule 26' bestehende Magnetantrieb den Steuerkolben 24' und somit den Ventilkörper 16' vom Dichtsitz am Ventilkolben 12' entgegen dem am Ansteuerkolben 82 in der Ansteuerkammer 80 anstehenden Steuerdruck weg, wobei der Ansteuerkolben 82 in der Ansteuerkammer 80 solange zurückfährt, bis der sich durch den größer werdenden Ventilspalt 18' des Regelventils RGV$_{HR}$ vermindernde Staudruck den Erfordernissen entsprechend angeglichen ist.

Aus der obigen Beschreibung ist ersichtlich, daß der über den Radbremskreis RBK$_{HR}$ an den Bremssattel 54' am Hinterrad HR angelegte Bremsdruck durch Bestromung des aus Steuerkolbenanker und Magnetspule 26' bestehenden Magnetantriebs des Regelventils RGV$_{HR}$ aktiv eingestellt werden kann. Wie dies erfolgt, um eine optimierte Bremskraftverteilung an Vorderrad VR und Hinterrad HR zu erhalten, wird nachfolgend noch näher beschrieben werden.

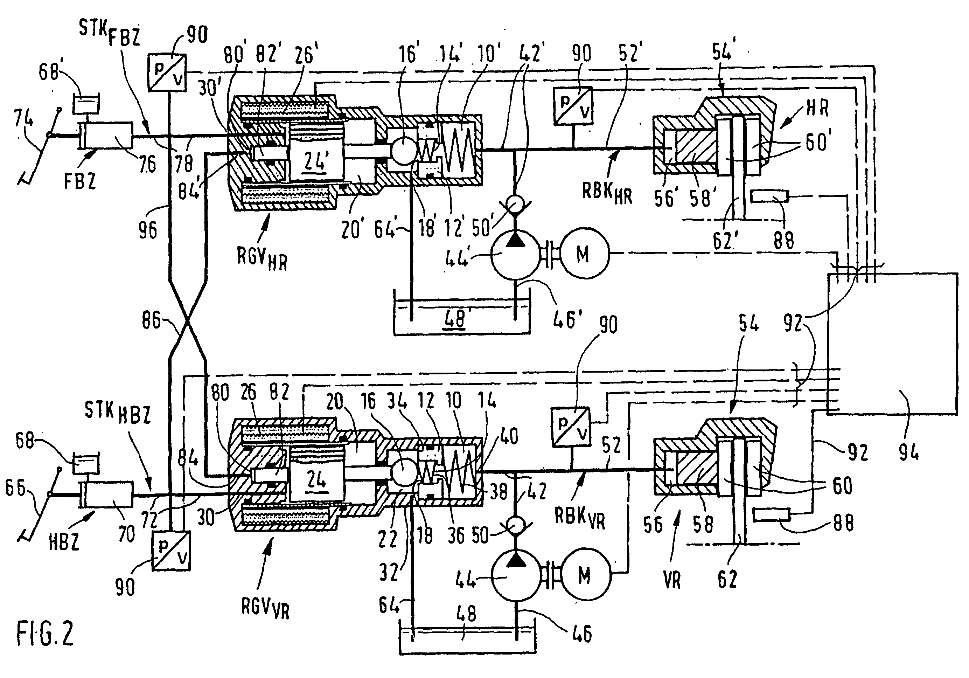

Die Fig. 2 zeigt die Vollintegral-Bremsanlage im unbetätigten Zustand, die nachfolgend hinsichtlich Aufbau, Schaltung und Funktion nur insoweit beschrieben werden soll, als sie sich von der Teilintegral-Bremsanlage unterscheidet. Gleiche oder entsprechende Teile sind wiederum mit den gleichen Bezugszeichen, ggf. ergänzt um einen Strich, versehen.

Aus einem Vergleich der Fig. 1 und 2 ist unmittelbar ersichtlich, daß bei der Vollintegral-Bremsanlage zwei in Aufbau, Verschaltung und Funktion identische Regelventile RGV$_{VR}$ und RGV$_{HR}$ zum Einsatz kommen, die dem Regelventil RGV$_{HR}$ der oben beschriebenen Teilintegral-Bremsanlage entsprechen, d.h. zweifach hydraulisch (Anschluß 30 bzw. 30', Anschluß 84 bzw. 84') und einfach elektrisch (Magnetspule 26 bzw. 26') ansteuerbar sind. Des weiteren zweigt bei der Vollintegral-Bremsanlage nach Fig. 2 in Ergänzung der Teilintegral-Bremsanlage gemäß Fig. 1 auch von der hydraulischen Steuerleitung 78 des Steuerkreises STK$_{FBZ}$ eine Steuerleitung 96 ab, die an den Steueranschluß 84 des Regelventils RGV$_{VR}$ angeschlossen ist. Im Ergebnis wird bei einer Betätigung des Handbremszylinders HBZ sowohl die Steuerkammer 20 und damit der Steuerkolben 24 des dem Radbremskreis RBK$_{VR}$ für das Vorderrad VR zugeordneten Regelventils RGV$_{VR}$ als auch die Ansteuerkammer 80' und damit über den Ansteuerkolben 82' der Steuerkolben 24' des dem Radbremskreis RBK$_{HR}$ für das Hinterrad HR zugeordneten Regelventils RGV$_{HR}$ hydraulisch beaufschlagt. Bei einer Betätigung des Fußbremszylinders FBZ hingegen wird sowohl die Steuerkammer 20' und damit der Steuerkolben 24' des dem Radbremskreis RBK$_{HR}$ für das Hinterrad HR zugeordneten Regelventils RGV$_{HR}$ als auch die Ansteuerkammer 80 und somit über den Ansteuerkolben 82 der Steuerkolben 24 des dem Radbremskreis RBK$_{VR}$ für das Vorderrad VR zugeordneten Regelventils RGV$_{VR}$ hydraulisch beaufschlagt. Mit anderen Worten gesagt genügt wahlweise der Griff zum Handbremshebel 66 oder ein Tritt auf den Fußbremshebel 74 zur gemeinsamen Aktivierung von Vorder- und Hinterradbremse.

Da mit zunehmender Bremsverzögerung die übertragbare Bremskraft des Hinterrads HR abnimmt (Bremsdynamik) bis das Hinterrad HR im Extremfall den Bodenkontakt verliert, wird -- sowohl bei der beschriebenen Teilintegral-Bremsanlage als auch bei der zuletzt behandelten Vollintegral-Bremsanlage -- über den aus Steuerkolbenanker und Magnetspule 26' bestehenden Magnetantrieb des Regelventils RGV$_{HR}$ der Bremsdruck im Radbremskreis RBK$_{HR}$ für das Hinterrad HR gemäß einer idealen Bremskraftverteilung, d.h. einer idealen Aufteilung der Bremskraft zwischen Vorderrad VR und Hinterrad HR verringert, wie nachfolgend näher beschrieben werden wird.

Bei dem nunmehr beschriebenen Verfahren zur Regelung der Bremskraft an den Rädern VR, HR eines Motorrads wird von der Überlegung ausgegangen, daß zur bestmöglichen Ausnutzung des Kraftschlusses Reifen/Untergrund bei der Bremsung des Motorrads beide Räder VR, HR möglichst entsprechend ihren dynamischen Radlasten Bremskräfte aufbringen müssen, wobei die Anpassung dieser Bremskräfte an die jeweiligen dynamischen Radlasten eine schwierige Aufgabe ist, die hier nicht dem Fahrer des Motorrads überlassen werden sollte, zumal sie dort problematischer ist als bei anderen Kraftfahrzeugen (Verhältnis Schwerpunkthöhe zu Radstand, Sturzgefahr). Mit anderen Worten gesagt sollen die während eines Fahrtzyklus wechselnden Einflüsse durch eine entsprechende Regelung der Bremskraftverteilung zwischen Vorderrad VR und Hinterrad HR automatisch kompensiert werden, um jeden Bremsvorgang nahe der idealen Kennung durchzuführen, was unter den jeweiligen Gegebenheiten eine gleichmäßige Ausnutzung des jeweils gegebenen Kraftschlusses zwischen Reifen und Untergrund bedeutet. Dazu wird im Kern das in der oben beschriebenen Teilintegral- bzw. Vollintegral-Bremsanlage im Radbremskreis RBK$_{HR}$ für das Hinterrad HR angeordnete Regelventil RGV$_{HR}$ in Abhängigkeit von dem mittels des Drucksensors 90 im Radbremskreis RBK$_{VR}$ für das Vorderrad VR gemessenen Bremsdruck p$_{VRist}$ als Führungsgröße unter Zugrundelegung einer vorgegebenen, in der Steuereinheit 94 der Bremsanlage abgelegten Bremskraftverteilungscharakteristik bestromt, um die Räder VR, HR des Motorrads bereits beim Einstieg in einen Bremsvorgang einer gleichmäßigen Kraftschlußausnutzung zu unterziehen. Hierbei wird auch der Beladungszustand des Motorrads berücksichtigt. Optional kann ferner die Temperaturentwicklung insbesondere an der Bremsscheibe 62' am Hinterrad HR bei der Regelung des Bremsdrucks im Radbremskreis RBK$_{HR}$ für das Hinterrad HR mit Berücksichtigung finden.

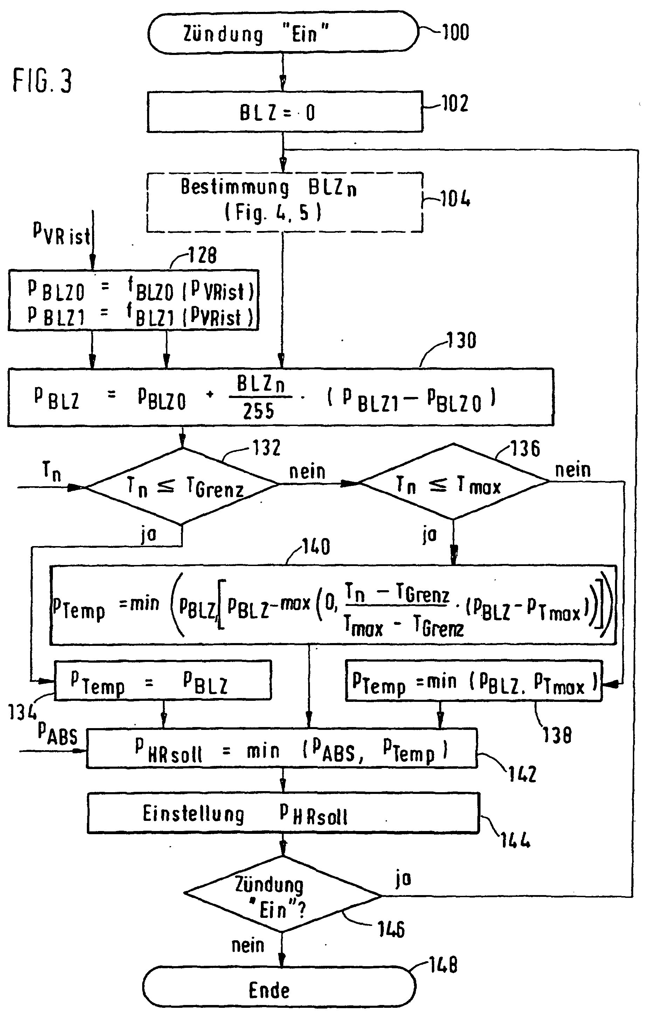

Der Verfahrensablauf bei der Regelung der Bremskraftverteilung wird nachfolgend unter Bezugnahme auf die Fig. 3 bis 8 näher erläutert, wobei vorauszuschicken ist, daß die oben beschriebene ABS-Regelung an jedem Rad VR, HR grundsätzlich unabhängig von der Regelung der Bremskraftverteilung erfolgt. Befindet sich ein Rad VR, HR in einer ABS-Regelung, wird an diesem Rad VR, HR eine optimale Ausnutzung des Kraftschlusses zwischen Reifen und Untergrund ja bereits erzielt. Die nunmehr zu beschreibenden Regelungsschleifen werden mit einem zeitlichen Abstand von 8 ms durchlaufen.

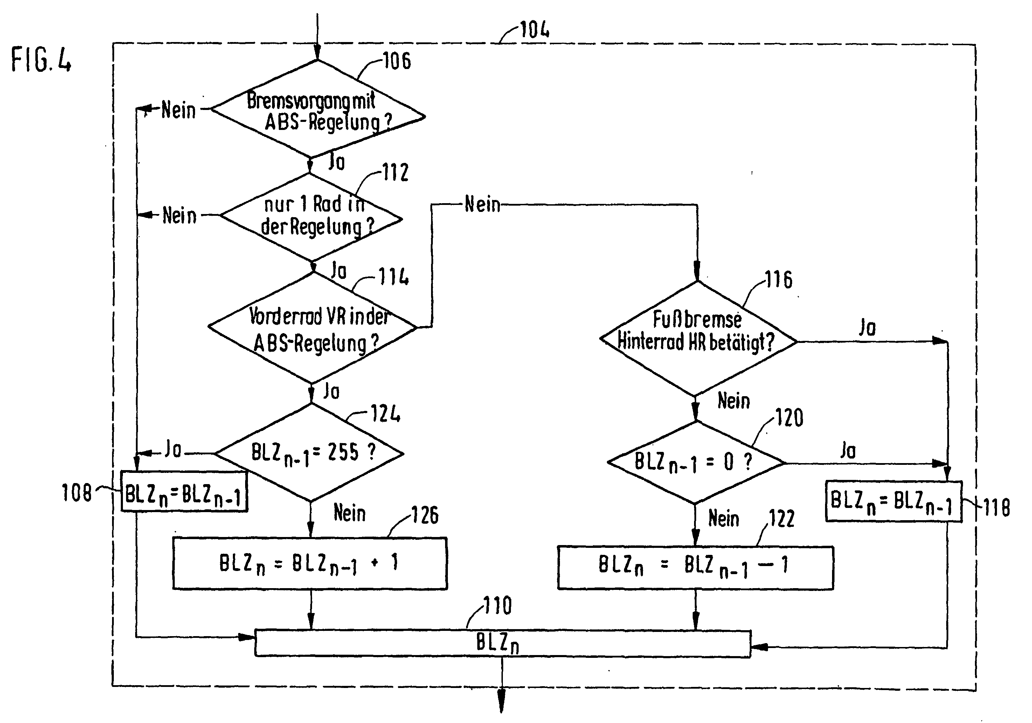

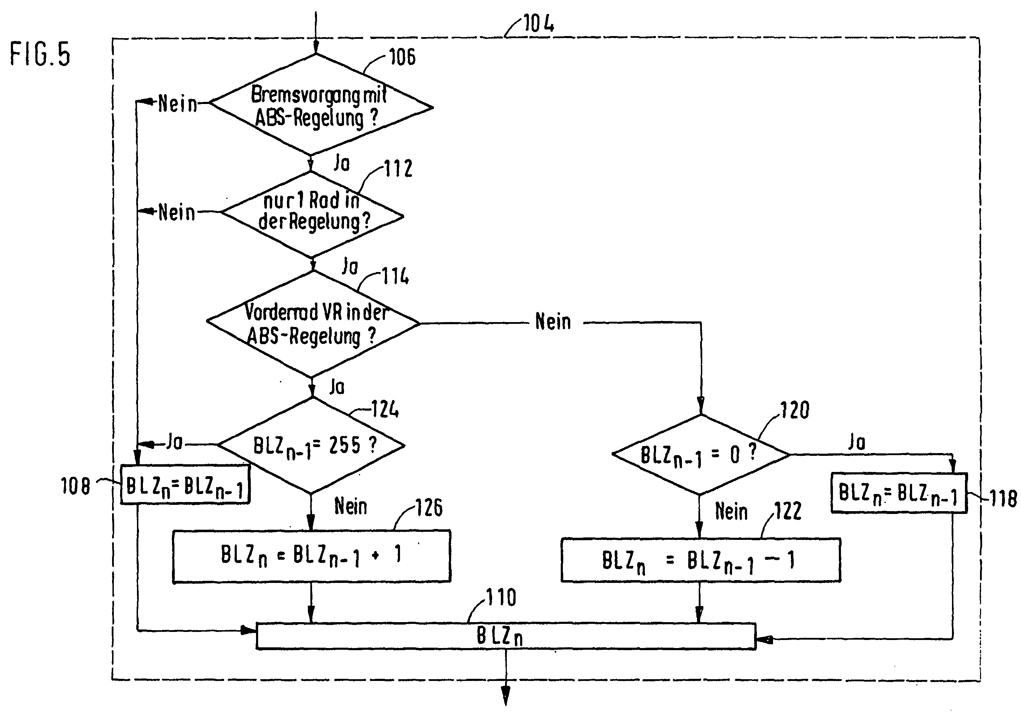

Gemäß Fig. 3 wird nach Einschaltung der Zündung im Schritt 100 zunächst im Schritt 102 ein ganzzahliger Zähler BLZ, der zwischen 0 und 255 betragen kann und ein Maß für die Beladung des Motorrads darstellt, auf Null gesetzt. Sodann wird bei 104 der Zähler $BLZ_n$ für die jeweilige Regelungsschleife n bestimmt. Dies ist in Fig. 4 für die Teilintegral-Bremsanlage gemäß Fig. 1 und in Fig. 5 für die Vollintegral-Bremsanlage gemäß Fig. 2 näher dargestellt.

Wie die Fig. 4 zeigt, erfolgt bei der Bestimmung des Zählers BLZ im Schritt 106 zunächst die Abfrage, ob ein Bremsvorgang mit ABS-Regelung vorliegt. Ist dies zu verneinen, wird im Schritt 108 der Zähler $BLZ_n$ der aktuellen Regelungsschleife n dem Zähler $BLZ_{n-1}$ der letzten Regelungsschleife n-1 gleichgesetzt und die Bestimmung des Zählers $BLZ_n$ ist bei 110 für diese Regelungsschleife n beendet.

Liegt im Schritt 106 ein Bremsvorgang mit ABS-Regelung vor, wird als nächstes im Schritt 112 überprüft, ob nur ein Rad in der ABS-Regelung ist. Ist dies zu verneinen, d.h. wenn sich beide Räder in der ABS-Regelung befinden, wird im Schritt 108 wiederum der Zähler $BLZ_n$ der aktuellen Regelungsschleife n dem Zähler $BLZ_{n-1}$ der letzten Regelungsschleife n-1 gleichgesetzt und die Bestimmung des Zählers $BLZ_n$ ist bei 110 für diese Regelungsschleife n abgeschlossen. Insoweit kann festgehalten werden, daß, wenn kein Rad ABS-geregelt wird oder beide Räder ABS-geregelt werden, der Zähler BLZ für den Beladungszustand keine Änderung erfährt.

Liegt nur ein Rad in der ABS-Regelung, wird im Schritt 114 überprüft, ob es sich hierbei um das Vorderrad VR handelt. Wenn dies zu verneinen ist -- d.h. es muß sich um das Hinterrad HR handeln -- schließt sich im Schritt 116 eine Überprüfung an, ob die Fußbremse für das Hinterrad HR betätigt wird. Ist dies zu bejahen, wird im Schritt 118 der Zähler $BLZ_n$ der momentanen Regelungsschleife n dem Zähler $BLZ_{n-1}$ der letzten Regelungsschleife n-1 gleichgesetzt und die Bestimmung des Zählers $BLZ_n$ ist bei 110 für diese Regelungsschleife n beendet.

Wenn der Schritt 116 zu dem Ergebnis führt, daß die Fußbremse für das Hinterrad HR nicht betätigt wird, wird im Schritt 120 überprüft, ob der Zähler $BLZ_{n-1}$ der vorausgegangenen Regelungsschleife n-1 Null beträgt. Führt dies zu einem positiven Ergebnis, wird im Schritt 118 der Zähler $BLZ_n$ der aktuellen Regelungsschleife n wiederum dem Zähler $BLZ_{n-1}$ der letzten Regelungsschleife n-1 gleichgesetzt und die Bestimmung des Zählers $BLZ_n$ ist bei 110 für diese Regelungsschleife n abgeschlossen.

Ist der Zähler $BLZ_{n-1}$ der letzten Regelungsschleife n-1 im Schritt 120 ungleich, d.h. größer als Null, berechnet sich der Zähler $BLZ_n$ der aktuellen Regelungsschleife n aus der im Schritt 122 angegebenen Beziehung, d.h. der Zähler BLZ wird um eins herabgesetzt bzw. runter gezählt, und die Bestimmung des Zählers $BLZ_n$ ist bei 110 für diese Regelungsschleife n beendet.

Wenn der Schritt 114 auf der linken Seite der Fig. 4 zu dem Ergebnis geführt hat, daß das Vorderrad VR in der ABS-Regelung ist, wird im Schritt 124 überprüft, ob der Zähler $BLZ_{n-1}$ der vorausgegangenen Regelungsschleife n-1 einen Wert von 255 aufweist, d.h. die Obergrenze des Zählers BLZ bereits erreicht ist. Führt dies zu einem positiven Ergebnis, wird im Schritt 108 der Zähler $BLZ_n$ der aktuellen Regelungsschleife n dem Zähler $BLZ_{n-1}$ der letzten Regelungsschleife n-1 gleichgesetzt und die Bestimmung des Zählers $BLZ_n$ ist bei 110 für diese Regelungsschleife n abgeschlossen.

Wenn der Zähler $BLZ_{n-1}$ im Schritt 124 den Wert 255 noch nicht erreicht hat, berechnet sich der Zähler $BLZ_n$ der aktuellen Regelungsschleife n aus der im Schritt 126 angegebenen Beziehung, d.h. der Zähler BLZ wird um eins heraufgesetzt bzw. hoch gezählt, und die Bestimmung des Zählers $BLZ_n$ ist bei 110 für diese Regelungsschleife n beendet.

Die Fig. 5 für die Vollintegral-Bremsanlage entspricht im übrigen der Fig. 4 für die Teilintegral-Bremsanlage bis auf die Tatsache, daß in der Fig. 5 keine Abfrage entsprechend dem Schritt 116 erfolgt.

Mit dem somit erhaltenen Zähler $BLZ_n$ für die aktuelle Regelungsschleife n wird entsprechend Fig. 3 nunmehr weitergearbeitet. Parallel zur Bestimmung des Zählers $BLZ_n$ im Schritt 104 wird mittels des Drucksensors 90 im Radbremskreis $RBK_{VR}$ für das Vorderrad VR der Teilintegral-Bremsanlage bzw. der Vollintegral-Bremsanlage der momentane Ist-Wert $p_{VRist}$ des in der Druckkammer 56 des Bremssattels 54 anstehenden Bremsdruckes erfaßt. Dieser Bremsdruckwert $p_{VRist}$ dient als Führungsgröße bzw. wesentlicher Eingangswert der weiteren Bremskraftverteilungsregelung.

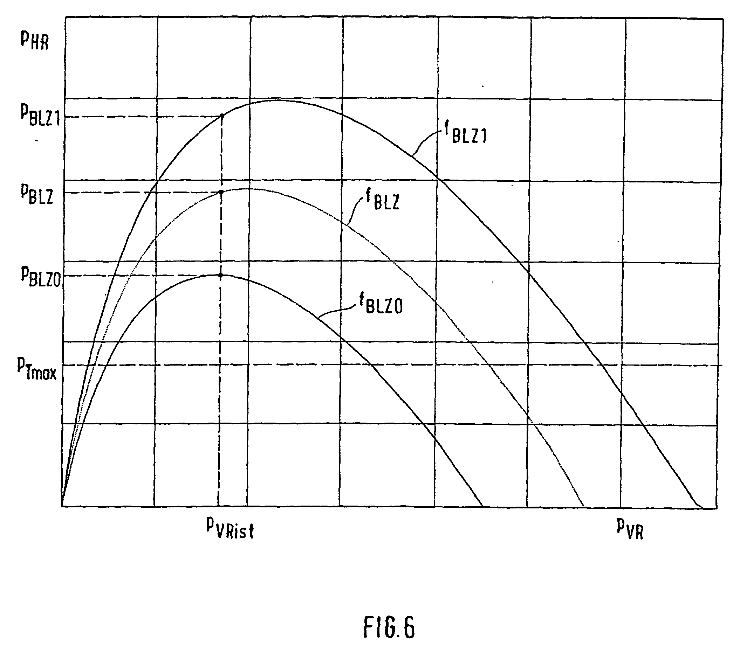

Im Schritt 128 werden nun die Druckberechnungsgrößen $p_{BLZ0}$ und $p_{BLZ1}$ als Funktion $f_{BLZ0}$ bzw. $f_{BLZ1}$ des Ist-Werts $p_{VRist}$ für den Bremsdruck am Vorderrad VR bestimmt. Hierzu ist an dieser Stelle auf die Fig. 6 zu verweisen. In Fig. 6 ist der Bremsdruck $p_{HR}$ am Hinterrad HR als Funktion des Bremsdrucks $p_{VR}$ am Vorderrad VR aufgetragen; gleichermaßen könnte hier auch die Bremskraft am Hinterrad HR als Funktion der Bremskraft am Vorderrad VR aufgetragen sein (Druck und Kraft verhalten sich proportional zueinander). In dieses Diagramm sind zwei Kurven bzw. Funktionen $f_{BLZ0}$ und $f_{BLZ1}$ eingezeichnet, bei denen es sich um Kurven idealer Bremskraftverteilung für verschiedene Beladungszustände des Motorrads handelt. Jeder Punkt dieser Kurven ordnet einem bestimmten Bremsdruck $p_{VR}$ am Vorderrad VR also einen bestimmten Bremsdruck $p_{HR}$ am Hinterrad HR zu, bei dem eine optimale Ausnutzung des Kraftschlusses zwischen Reifen und Untergrund vorliegt. Bei der Kurve $f_{BLZ0}$ handelt es sich um die fahrzeugspezifische Kurve idealer Bremskraftverteilung für das leere, d.h. nicht beladene Motorrad. Bei dieser Kurve $f_{BLZ0}$ kann allerdings auch bereits eine Grundbeladung, z.B. für einen Fahrer berücksichtigt sein. Die Kurve $f_{BLZ1}$ hingegen repräsentiert die fahrzeugspezifische Kurve idealer Bremskraftverteilung für das voll, d.h. maximal beladene Motorrad. Die Kurven $f_{BLZ0}$ und $f_{BLZ1}$ werden fahrzeugspezifisch u.a. durch die Durchführung von Fahrversuchen ermittelt und sind elektronisch (EPROM) in der Steuereinheit 94 der Teilintegral- bzw. Vollintegral-Bremsanlage abgelegt, beispielsweise in der Form einer Mehrzahl von Stützpunkten, wobei Zwischenwerte mathematisch interpoliert werden können. Der vertikale Abstand der Kurven $f_{BLZ0}$ und $f_{BLZ1}$ wird rechnerintern als 1 Byte behandelt, mit einer Anzahl von dementsprechend 256 Teilschritten zwischen den Kurven $f_{BLZ0}$ und $f_{BLZ1}$.

Für den in der jeweiligen Regelungsschleife n erfaßten Ist-Wert $p_{VRist}$ für den Bremsdruck am Vorderrad VR werden im Schritt 128 aus der oben beschriebenen, in der Steuereinheit 94 der Bremsanlage abgelegten Bremskraftverteilungscharakteristik also die über die Kurven $f_{BLZ0}$ bzw. $f_{BLZ1}$ zugeordneten, den Beladungszustand des Motorrads berücksichtigenden Druckberechnungsgrößen $P_{BLZ0}$ und $p_{BLZ1}$ bestimmt. In Fig. 6 ist dies mittels der vertikal verlaufenden, gestrichelten Linie veranschaulicht: Dem jeweiligen Schnittpunkt dieser Linie, deren Lage sich aus dem erfaßten Ist-Wert $p_{VRist}$ für den Bremsdruck am Vorderrad VR ergibt, mit der Kurve $f_{BLZ0}$ bzw. $f_{BLZ1}$ ist die jeweilige Druckberechnungsgröße $p_{BLZ0}$ und $p_{BLZ1}$ zugeordnet.

Als Eingangsgrößen für den nächsten Schritt 130 der Regelung dienen somit der Zähler $BLZ_n$ sowie die Druckberechnungsgrößen $p_{BLZ0}$ und $p_{BLZ1}$. Im Schritt 130 wird aus diesen Größen mittels der in Fig. 3 angegebenen Berechnungsvorschrift eine Druckberechnungsgröße $p_{BLZ}$ berechnet, die repräsentativ für den Beladungszustand des Motorrads ist. Entsprechend dieser Berechnungsvorschrift wird in Fig. 6 quasi die Kurve $f_{BLZ}$ mit zunehmendem Zähler $BLZ_n$ zwischen den Kurven $f_{HLZ0}$ und $f_{BLZ1}$ nach oben verschoben, während die Kurve $f_{BLZ}$ mit abnehmendem Zähler $BLZ_n$ zwischen den Kurven $f_{BLZ0}$ und $f_{BLZ1}$ nach unten verschoben wird. Bleibt der Zähler $BLZ_n$ in der aktuellen Regelungsschleife n konstant, findet keine Verschiebung der Kurve $f_{BLZ}$ statt. Aus dem Vorstehenden und den Fig. 4 und 5 ist ersichtlich, daß eine Verschiebung der Kurve $f_{BLZ}$ -- soweit diese nach oben bzw. unten noch möglich ist (Schritte 120 und 124: die Grenzen der Verschiebung werden durch die Kurven $f_{BLZ0}$ und $f_{BLZ1}$ gebildet) -erst dann erfolgt, wenn eines der Räder VR, HR in die ABS-Regelung kommt. Befindet sich keines der Räder VR, HR in einer ABS-Regelung oder befinden sich beide Räder VR, HR in einer ABS-Regelung findet eine Verschiebung der Kurve $f_{BLZ}$ nicht statt. Mit anderen Worten gesagt wird bei einer ABS-Regelung nur eines der Räder VR, HR als auslösendem Umstand die Bremskraftverteilung zwischen den Kurven $f_{BLZ0}$ und $f_{BLZ1}$ derart geändert, daß beide Räder VR, HR in die ABS-Regelung kommen, so daß der Kraftschluß zwischen Reifen und Untergrund zur Erzielung einer bestmöglichen Verzögerung bzw. eines möglichst kurzen Bremsweges optimal ausgenutzt wird. Auch kommen beide Räder VR, HR nur gemeinsam aus der ABS-Regelung heraus.

In der Praxis relevant wird die Verschiebung bzw. Anpassung der Bremskraftverteilungskurve an die Idealkennlinie z.B. beim Hineinbremsen in Kehren oder Kurven, wobei ein neutrales Kurvenverhalten erzielbar ist, d.h. gleiche Schräglaufwinkeländerungen an Vorder- und Hinterachse. Somit wird auch die beste Ausnutzung der Seitenführungskräfte gewährleistet und ein für den Fahrer überraschendes Verhalten des Fahrzeugs vermieden. Gleiches gilt bei Hochgeschwindigkeit.

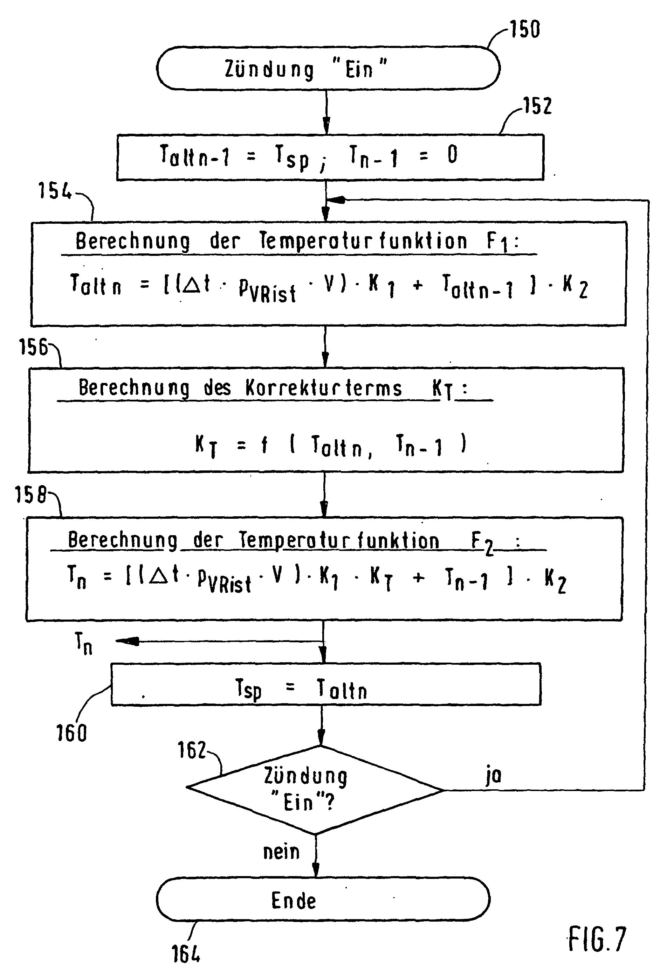

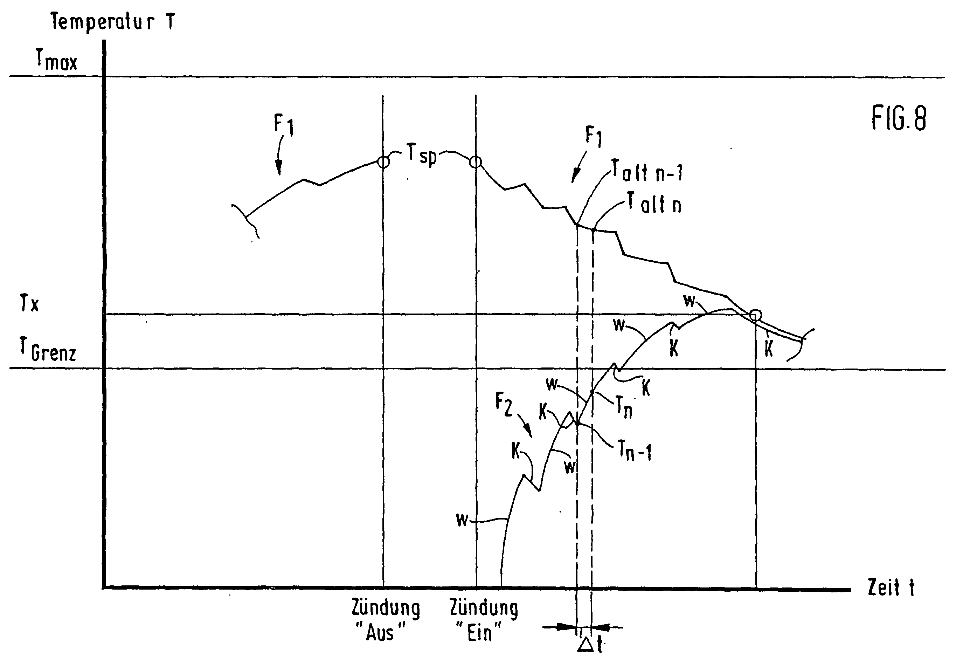

In den nächsten Schritten des in Fig. 3 dargestellten Verfahrens wird die Temperatur der Bremsscheibe 62' am Hinterrad HR mit berücksichtigt. Die Berücksichtigung der Temperatur der Bremsscheibe 62' am Hinterrad HR kann im hier beschriebenen Verfahrensablauf erfolgen, muß aber nicht. Als Eingangsgröße für diesen Vorgang, der auch als Temperaturkompensation bezeichnet werden kann, dient die Temperatur $T_n$ der Bremsscheibe 62' am Hinterrad HR. Diese kann grundsätzlich mittels einer geeigneten Sensorik (Temperaturfühler) aktuell gemessen werden, wird im hier beschriebenen Verfahrensbeispiel aber unter Zuhilfenahme eines Temperaturmodells berechnet, welches nachfolgend unter Bezugnahme auf die Fig. 7 und 8 noch näher beschrieben werden wird.

Sinn und Zweck der Temperaturkompensation ist es, die Fahrsicherheit zu erhöhen. Zwar wirken bei einem Motorrad insbesondere aufgrund der im Vergleich zu mehrspurigen Fahrzeugen größeren Unterschiede der Achslasten am Hinterrad grundsätzlich keine so großen Bremskräfte. Jedoch gibt es Fahrsituationen wie z.B. bei langen Bergabfahrten, bei denen es zu einer übermäßigen Beanspruchung der Hinterradbremse durch den Fahrer kommen kann. Den damit einhergehenden möglichen funktionellen Beeinträchtigungen soll deshalb im Fahrbetrieb automatisch begegnet werden, um hier den Fahrer zu unterstützen. Prinzipiell wäre auch eine Temperaturkompensation im Hinblick auf die Bremsscheibe am Vorderrad möglich. Die Bremsscheibe(n) am Vorderrad ist jedoch grundsätzlich sicherer ausgelegt, nicht von Verkleidungen verdeckt und liegt somit im kühlenden Fahrtwind.

Zurückkommend auf die Fig. 3 wird im Schritt 132 überprüft, ob die aktuelle Temperatur $T_n$ der Hinterrad-Bremsscheibe 62' unterhalb einer vorgegebenen Grenztemperatur $T_{Grenz}$ liegt bzw. dieser entspricht. Die Grenztemperatur $T_{Grenz}$ ist hierbei ein fester Wert, der u.a. eine kritische Temperatur der Bremsflüssigkeit berücksichtigt. Ist das Ergebnis der Überprüfung positiv, besteht keine Notwendigkeit einer Temperaturkompensation und die Druckberechnungsgröße $p_{Temp}$ wird im Schritt 134 der zuvor ermittelten Druckberechnungsgröße $p_{BLZ}$ gleichgesetzt.

Führt die Überprüfung im Schritt 132 zu dem Ergebnis, daß die Temperatur $T_n$ größer als die Grenztemperatur $T_{Grenz}$ ist, wird im Schritt 136 überprüft, ob die Temperatur $T_n$ kleiner oder gleich einer Maximaltemperatur $T_{max}$ ist. Die Maximaltemperatur $T_{max}$ ist hierbei

ein fester Wert, der auslegungsbedingt nicht überschritten werden soll, damit es nicht zu Heißfading kommt.

Liegt die Temperatur $T_n$ oberhalb von der Maximaltemperatur $T_{max}$, ist der Bremsdruck am Hinterrad HR deutlich zu begrenzen. Im Schritt 138 wird sodann die Druckberechnungsgröße $p_{Temp}$ gleich dem minimalen Wert von der obigen Druckberechnungsgröße $p_{BLZ}$ und einem Druckwert $p_{Tmax}$ gesetzt. Dabei ist $p_{Tmax}$ gemäß Fig. 6 ein fester, der Maximaltemperatur $T_{max}$ zugeordneter Druckwert, der verhältnismäßig niedrig liegt und bei dem, würde er der Hinterradbremse 54' angelegt, jedenfalls eine weitere Erwärmung der Bremsscheibe 62' nicht zu erwarten steht.

Führt die Überprüfung im Schritt 136 zu dem Ergebnis, daß die Temperatur $T_n$ noch unterhalb von der Maximaltemperatur $T_{max}$, d.h. zwischen der Grenztemperatur $T_{Grenz}$ und der Maximaltemperatur $T_{max}$ liegt, wird die im Schritt 140 angegebene Rechenvorschrift ausgeführt.

Demgemäß wird die Druckberechnungsgröße $p_{Temp}$ gleich dem minimalen Wert von der obigen Druckberechnungsgröße $p_{BLZ}$ und dem im Schritt 140 in ekkige Klammern gesetzten Term gesetzt. Der in eckige Klammern gesetzte Term ergibt entweder die obige Druckberechnungsgröße $p_{BLZ}$ oder einen Druckwert, der kleiner ist als die Druckberechnungsgröße $p_{BLZ}$. Es ist ersichtlich, daß hier die Differenz aus der Temperatur $T_n$ und der Grenztemperatur $T_{Grenz}$ ins Verhältnis gesetzt wird zu der Differenz aus der Maximaltemperatur $T_{max}$ und der Grenztemperatur $T_{Grenz}$ und dieses Verhältnis sodann multipliziert wird mit der Differenz aus der Druckberechnungsgröße $p_{BLZ}$ und dem Druckwert $p_{Tmax}$. Mit anderen Worten gesagt wird die Druckberechnungsgröße $p_{BLZ}$ in vorbestimmter Weise in Abhängigkeit von der Temperatur $T_n$ sowie dem Abstand der Druckberechnungsgröße $p_{BLZ}$ von dem Druckwert $p_{Tmax}$ reduziert. Das Ergebnis ist eine definierte Verringerung des Bremsdrucks mit dem Ziel, die Temperatur der Hinterrad-Bremsscheibe 62' in vorbestimmten Grenzen zu halten.

Als Eingangsgröße für den Schritt 142 dient sodann neben der nunmehr ermittelten Druckberechnungsgröße $p_{Temp}$ der von der ABS-Regelung ermittelte Druckwert $p_{ABS}$, der während einer ABS-Regelung über das Regelventil $RGV_{HR}$ im Radbremskreis $RBK_{HR}$ des Hinterrades HR am Bremssattel 54' einzuregeln wäre. Als Soll-Wert $p_{HRsoll}$ für den Bremsdruck am Hinterrad HR wird im Schritt 142 der kleinere Wert von dem Druckwert $p_{ABS}$ und der Druckberechnungsgröße $p_{Temp}$ festgesetzt. Bei dieser Philosophie wird also, wenn die Temperaturentwicklung an der Bremsscheibe 62' am Hinterrad HR dies erfordert, die aufgrund der ABS-Regelung mögliche, optimale Ausnutzung des Kraftschlusses zwischen Reifen und Untergrund zugunsten einer definierten Abkühlung der Bremsscheibe 62' am Hinterrad HR zurückgestellt. Auch dieser Schritt 142 könnte den jeweiligen Erfordernissen entsprechend entfallen, ist hier aber bevorzugt vorgesehen.

Im Schritt 144 wird sodann der ermittelte Soll-Wert $p_{HRsoll}$ für den Bremsdruck am Hinterrad HR mittels des Regelventils $RGV_{HR}$ im Radbremskreis $RBK_{HR}$ des Hinterrades HR durch entsprechende Bestromung der Magnetspule 26' wie unter Bezugnahme auf die Fig. 1 und 2 ausführlich beschrieben eingestellt.

Solange schließlich im Schritt 146 festgestellt wird, daß die Zündung weiterhin auf "Ein" steht, d.h. eingeschaltet ist, beginnt die nächste Regelungsschleife mit dem Schritt 104 und somit der Bestimmung des Zählers $BLZ_n$ entsprechend den Fig. 4 und 5. Ist die Zündung ausgeschaltet worden, so wird der Regelungsvorgang bei 148 beendet.

Unter Bezugnahme auf die Fig. 7 und 8 soll abschließend das Temperaturmodell beschrieben werden, welches zur Berechnung der Temperatur $T_n$ der Bremsscheibe 62' am Hinterrad HR bevorzugt herangezogen wird.

Nach Zündung "EIN" bei 150 werden im Schritt 152 zunächst die Startwerte für zwei in Fig. 8 gezeigte Temperaturfunktionen $F_1$ und $F_2$ festgesetzt, die stets gemeinsam berechnet werden. In Fig. 8 ist lediglich der Übersichtlichkeit halber auf der linken Seite nur die Temperaturfunktion $F_1$ gezeigt.

Im Schritt 154 erfolgt sodann die Berechnung der Temperaturfunktion $F_1$, wobei sich ein Temperaturwert $T_{altn}$ der aktuellen Regelungsschleife n aus der angegebenen Beziehung ergibt, in der die folgenden Größen verrechnet werden (bereits bekannte Größen werden nicht nochmals aufgeführt):

$\Delta t =$ Zeitintervall, während dessen der Bremsscheibe 62' Energie zugeführt bzw. aus der Bremsscheibe 62' Energie abgeführt wird.

$v =$ Geschwindigkeit des Fahrzeugs, welche sich aus den Signalen des Drehzahlsensors 88 vorzugsweise am Vorderrad VR bestimmen läßt.

$K_1 =$ Eine über Fahrversuche ermittelte Konstante, die repräsentativ für die Aufheizung der Bremsscheibe 62' infolge insbesondere der aufgebrachten mechanischen Reibenergie ist.

$K_2 =$ Eine über Fahrversuche ermittelte Konstante, die repräsentativ für die Abkühlung der Bremsscheibe 62' infolge insbesondere der Wärmestrahlung und der Umspülung durch Fahrtwind ist.

Im Schritt 156 wird als nächstes ein Korrekturterm $K_T$ als Funktion der Temperaturwerte $T_{altn}$ und $T_{n-1}$ berechnet. Die dazugehörige Berechnungsformel lautet:

$$K_T = 1 + k * max [0, (T_{altn} - T_{n-1})],$$

wobei k einen konstanten Skalierungsfaktor darstellt.

Im Schritt 158 wird sodann die Temperatur $T_n$ aus der angegebenen Temperaturfunktion $F_2$ berechnet. Es ist ersichtlich, daß, nachdem $K_T$ stets größer gleich 1 ist, dieser Korrekturterm $K_T$ die Temperaturfunktion $F_2$ "beschleunigt" bzw. unter einer größeren Steigung verlaufen läßt, solange, bis die Temperaturfunktionen $F_1$ und $F_2$ wieder übereinander verlaufen. Die berechnete Temperatur $T_n$ kann nun im Regelungsablauf gemäß Fig. 3 (Schritt 132) weiterverarbeitet werden.

Im Schritt 160 wird der Temperaturwert $T_{altn}$ der Temperaturfunktion $F_1$ in der aktuellen Regelungsschleife n als Wert $T_{sp}$ in der Steuereinheit 94 gespeichert, so daß er nach Zündung "AUS" und erneutem Zündung "EIN" für die Weiterverarbeitung verfügbar ist.

Wenn die Abfrage im Schritt 162 zu dem Ergebnis führt, daß weiterhin die Zündung auf "EIN" steht, d.h. eingeschaltet ist, beginnt eine neue Regelungsschleife mit dem Schritt 154. Ansonsten findet der Regelungsvorgang bei 164 sein Ende.

Die Fig. 8 verdeutlicht schließlich, daß, wie sich bereits aus dem Ablaufdiagramm gemäß Fig. 7 ergibt, bei der Berechnung der Temperatur der Bremsscheibe 62' mit Zündung "EIN" stets die zwei Temperaturfunktionen $F_1$, $F_2$ gebildet werden, von denen die eine Temperaturfunktion $F_1$ nach Zündung "AUS" und erneutem Zündung "EIN" stets bei dem zuletzt berechneten Temperaturwert $T_{altn-1} = T_{sp}$ wieder ansetzt, während die andere, den weiterverrechneten Temperaturwert $T_n$ liefernde Temperaturfunktion $F_2$ mit Zündung "EIN" stets wieder bei Null ansetzt, wobei letztere die Ergebnisse $T_{altn}$ der ersten Temperaturfunktion $F_1$ dergestalt verrechnet, daß sie unter einer größeren Steigung verläuft, bis beide Temperaturfunktionen bei $T_x$ wieder gleiche Ergebnisse liefern. Die Bezugszeichen w und k geben im übrigen exemplarisch an der Temperaturfunktion $F_2$ an, wann Energie der Bremsscheibe 62' zugeführt (w) wird, und wann abgeführt (k).

Das beschriebene Temperaturmodell hat zum einen den Vorteil, daß eine aufwendige Sensorik zur Erfassung der Bremsscheibentemperatur nicht benötigt wird. Zum anderen kommt es in vorteilhafter Weise ohne elektronische Bau- und Zeitpufferelemente aus, die im Stillstand des Motorrades der Batterie Leistung entnehmen würden. Insbesondere der letztgenannte Vorteil, macht dieses Temperaturmodell auch für andere Anwendungen interessant, bei denen eine variable Temperatur an einem Körper mit Aufwärm- und Abkühlphasen rechnerisch ermittelt werden soll.

Es wird ein Verfahren zur Regelung der Bremskraft an den Rädern eines einspurigen Fahrzeugs unter Verwendung einer Bremsanlage offenbart, die nur einen Radbremskreis mit einem Druckmodulator zur Einstellung des Bremsdrucks $p_{VR}$ an einer Vorderradbremse, nur einen Rädbremskreis mit einem Druckmodulator zur Einstellung des Bremsdrucks $p_{HR}$ an einer Hinterradbremse, wenigstens einen Steuerkreis zur Ansteuerung beider Druckmodulatoren sowie eine Steuereinheit aufweist. Erfindungsgemäß wird der Bremsdruck $p_{HRsoll}$ im Radbremskreis für das Hinterrad in Abhängigkeit von dem im Radbremskreis für das Vorderrad mittels eines Drucksensors erfaßten Bremsdruck $p_{VRist}$ als Führungsgröße unter Zugrundelegung einer in der Steuereinheit abgelegten idealen Bremskraftverteilungscharakteristik ermittelt und durch den Druckmodulator im Radbremskreis für das Hinterrad eingestellt. Im Ergebnis wird ein Verfahren angegeben, welches bei einem Bremsvorgang in automatisierter Weise die bestmögliche Ausnutzung des Kraftschlusses zwischen Reifen und Untergrund ermöglicht. Die Erfindung umfaßt auch eine einfach aufgebaute Bremsanlage zur Durchführung des Verfahrens.

BEZUGSZEICHENLISTE:

| | |
|---|---|
| 10 | Druckkammer |
| 12 | Ventilkolben |
| 14 | Durchgangsbohrung |
| 16 | Ventilkörper |
| 18 | Drosselspalt |
| 20 | Steuerkammer |
| 22 | Ablaufkammer |
| 24 | Steuerkolben |
| 26 | Magnetspule |
| 28 | Anschlag |
| 30 | Anschluß |
| 32 | Anschluß |
| 34 | Absatz |
| 36 | Rückstellfeder |
| 38 | Kolbenfeder |
| 40 | Anschluß |
| 42 | Druckleitung |
| 44 | Hydraulikpumpe |
| 46 | Ansaugleitung |
| 48 | Vorratsbehälter |
| 50 | Rückschlagventil |
| 52 | Druckleitung |
| 54 | Bremssattel |
| 56 | Druckkammer |
| 58 | Kolben |
| 60 | Bremsbelag |
| 62 | Bremsscheibe |
| 64 | Rücklaufleitung |
| 66 | Handbremshebel |
| 68 | Ausgleichsbehälter |
| 70 | Druckkammer |
| 72 | Steuerleitung |
| 74 | Fußbremshebel |
| 76 | Druckkammer |
| 78 | Steuerleitung |
| 80 | Ansteuerkammer |
| 82 | Ansteuerkolben |
| 84 | Anschluß |

| | |
|---|---|
| 86 | Steuerleitung |
| 88 | Drehzahlsensor |
| 90 | Drucksensor |
| 92 | Steuerleitung |
| 94 | Steuereinheit |
| 96 | Steuerleitung |
| | |
| 100 - 164 | Verfahrensschritte |

**Patentansprüche**

1. Verfahren zur Regelung der Bremskraft an den Rädern (VR, HR) eines einspurigen Fahrzeugs unter Verwendung einer Bremsanlage, die nur einen Radbremskreis ($RBK_{VR}$) mit einem Druckmodulator ($RGV_{VR}$) zur Einstellung des Bremsdrucks ($p_{VR}$) an einer Vorderradbremse (54), nur einen Radbremskreis ($RBK_{HR}$) mit einem Druckmodulator ($RGV_{HR}$) zur Einstellung des Bremsdrucks ($p_{HR}$) an einer Hinterradbremse (54'), wenigstens einen Steuerkreis ($STK_{HBZ}$, $STK_{FBZ}$) zur Ansteuerung beider Druckmodulatoren ($RGV_{VR}$, $RGV_{HR}$) sowie eine Steuereinheit (94) aufweist, wobei der Bremsdruck ($p_{HRsoll}$) im Radbremskreis ($RBK_{HR}$) für das Hinterrad (HR) in Abhängigkeit von dem im Radbremskreis ($RBK_{VR}$) für das Vorderrad (VR) mittels eines Drucksensors (90) erfaßten Bremsdruck ($p_{VRist}$) als Führungsgröße unter Zugrundelegung einer in der Steuereinheit (94) abgelegten idealen Bremskraftverteilungscharakteristik ermittelt und durch den Druckmodulator ($RGV_{HR}$) im Radbremskreis ($RBK_{HR}$) für das Hinterrad (HR) eingestellt wird.

2. Verfahren nach Anspruch 1, wobei die in der Steuereinheit (94) abgelegte Bremskraftverteilungscharakterisitik zwei ideale Bremskraftverteilungskurven ($f_{BLZ0}$, $f_{BLZ1}$) umfaßt, von denen die eine Kurve ($f_{BLZ0}$) repräsentativ für ein unbeladenes Fahrzeug ist, während die andere Kurve ($f_{BLZ1}$) repräsentativ für ein maximal beladenes Fahrzeug ist.

3. Verfahren nach Anspruch 2, wobei ein für die tatsächliche Beladung des Fahrzeugs repräsentativer Zähler ($BLZ_n$) gebildet wird, der für einen im Radbremskreis ($RBK_{VR}$) für das Vorderrad (VR) erfaßten Bremsdruck ($p_{VRist}$) unter Berücksichtigung der beiden idealen Bremskraftverteilungskurven ($f_{BLZ0}$, $f_{BLZ1}$) der Berechnung einer Druckberechnungsgröße ($p_{BLZ}$) dient, die entsprechend der tatsächlichen Beladung des Fahrzeugs zwischen den oder auf einer der beiden idealen Bremskraftverteilungskurven ($f_{BLZ0}$, $f_{BLZ1}$) liegt, wobei der Bremsdruck ($p_{HRsoll}$) für das Hinterrad (HR) in Abhängigkeit von der berechneten Druckberechnungsgröße ($p_{BLZ}$) ermittelt wird.

4. Verfahren nach einem der vorhergehenden Ansprüche, wobei bei der Ermittlung des Bremsdrucks ($p_{HRsoll}$) für das Hinterrad (HR) die gemessene oder berechnete Temperatur ($T_n$) der Hinterradbremsscheibe (62') dergestalt mit berücksichtigt wird, daß der Bremsdruck ($p_{HRsoll}$) für das Hinterrad (HR) bei Überschreiten bestimmter Temperaturgrenzen ($T_{Grenz}$, $T_{max}$) abgesenkt wird.

5. Verfahren nach Anspruch 4, wobei bei der Berechnung der Temperatur der Bremsscheibe (62') mit Zündung "EIN" stets zwei Temperaturfunktionen ($F_1$, $F_2$) gebildet werden, von denen die eine Temperaturfunktion ($F_1$) als Hilfsfunktion dient, die nach Zündung "AUS" und erneutem Zündung "EIN" stets bei dem zuletzt berechneten Temperaturwert ($T_{altn-1} = T_{sp}$) wieder ansetzt, während die andere, den weiterverrechneten Temperaturwert ($T_n$) liefernde Temperaturfunktion ($F_2$) mit Zündung "EIN" stets wieder bei Null ansetzt, wobei letztere ($F_2$) die Ergebnisse ($T_{altn}$) der ersten Temperaturfunktion ($F_1$) dergestalt verrechnet, daß sie ($F_2$) unter einer größeren Steigung verläuft, bis beide Temperaturfunktionen gleiche Ergebnisse (Fig. 8: bei $T_x$) liefern.

6. Bremsanlage für einspurige Fahrzeuge zur Durchführung des Verfahrens nach einem der vorhergehenden Ansprüche, mit

nur einem Radbremskreis ($RBK_{VR}$) für das Vorderrad (VR), der einen Druckmodulator ($RGV_{VR}$) zur Einstellung eines an eine Vorderradbremse (54) anlegbaren Bremsdrucks ($p_{VR}$) aufweist,

nur einem Radbremskreis ($RBK_{HR}$) für das Hinterrad (HR), der einen Druckmodulator ($RGV_{HR}$) zur Einstellung eines an eine Hinterradbremse (54') anlegbaren Bremsdrucks ($p_{HR}$) aufweist,

einem ersten Steuerkreis ($STK_{HBZ}$), mittels dessen beide Druckmodulatoren ($RGV_{VR}$, $RGV_{HR}$) ansteuerbar sind,

einem zweiten Steuerkreis ($STK_{FBZ}$), mittels dessen beide Druckmodulatoren ($RGV_{VR}$, $RGV_{HR}$) ansteuerbar sind, und

einer Steuereinheit (94), in der eine ideale Bremskraftverteilungscharakteristik (Fig. 6) zwischen Vorderrad (VR) und Hinterrad (HR) abgelegt ist und mittels der der Druckmodulator ($RGV_{HR}$) im Radbremskreis ($RBK_{HR}$) für das Hinterrad (HR) ansteuerbar ist,

wobei im Radbremskreis ($RBK_{VR}$) für das Vorderrad (VR) ein Drucksensor (90) vorgesehen ist, mittels dessen der Bremsdruck ($p_{VRist}$) im Radbremskreis ($RBK_{VR}$) für das Vorderrad (VR) erfaßbar ist und der mit der Steuereinheit (94) verbunden ist,

wobei mittels des im Radbremskreis ($RBK_{VR}$) für das Vorderrad (VR) erfaßten Bremsdrucks

($p_{VRist}$) als Führungsgröße unter Zugrundelegung der in der Steuereinheit (94) abgelegten idealen Bremskraftverteilungscharakteristik (Fig. 6) ein Bremsdruck ($p_{HRsoll}$) für den Radbremskreis (RBK$_{HR}$) für das Hinterrad (HR) ermittelbar ist, und

wobei der ermittelte Bremsdruck ($p_{HRsoll}$) für den Radbremskreis (RBK$_{HR}$) für das Hinterrad (HR) durch den von der Steuereinheit (94) angesteuerten Druckmodulator (RGV$_{HR}$) im Radbremskreis (RBK$_{HR}$) für das Hinterrad (HR) einstellbar ist.

7. Bremsanlage nach Anspruch 6, wobei jeder Druckmodulator (RGV$_{VR}$, RGV$_{HR}$) einen Ventilkörper (16, 16') aufweist, der einen im Bremsbetrieb mit einem Druckmittel zwangsdurchströmten Drosselspalt (18, 18') ansteuerbar begrenzt, um in einer Druckkammer (10, 10') einen definierten Staudruck einzustellen, der der jeweiligen Radbremse (54, 54') anlegbar ist.

8. Bremsanlage nach Anspruch 7, wobei der Ventilkörper (16, 16') jedes Druckmodulators (RGV$_{VR}$, RGV$_{HR}$) zur Einstellung des Drosselspalts (18, 18') über einen Steuerkolben (24, 24') hydraulisch und elektromagnetisch ansteuerbar ist.

9. Bremsanlage nach Anspruch 8, wobei der Steuerkolben (24, 24') jedes Druckmodulators (RGV$_{VR}$, RGV$_{HR}$) durch Druckbeaufschlagung einer Steuerkammer (20, 20') und/oder mechanische Beaufschlagung über einen in einer Ansteuerkammer (80, 80') gleitbeweglich geführten, über die Ansteuerkammer (80, 80') hydraulisch beaufschlagbaren Ansteuerkolben (82, 82') verschiebbar ist.

10. Bremsanlage nach Anspruch 8 oder 9, wobei der Steuerkolben (24, 24') jedes Druckmodulators (RGV$_{VR}$, RGV$_{HR}$) mittels eines aus einem Anker am Steuerkolben (24, 24') und einer Magnetspule (26, 26') bestehenden Magnetantriebs verschiebbar ist.

11. Bremsanlage nach einem der Ansprüche 6 bis 10, wobei jeder Radbremskreis (RBK$_{VR}$, RBK$_{HR}$) mit einem Drucksensor (90) versehen ist.

12. Bremsanlage nach einem der Ansprüche 6 bis 11, wobei jeder Steuerkreis (STK$_{HBZ}$, STK$_{FBZ}$) mit einem Drucksensor (90) versehen ist.

## Claims

1. A method of controlling the braking force at the wheels (VR, HR) of a single-track vehicle using a brake system which comprises only one wheel brake circuit (RBK$_{VR}$) with a pressure modulator (RGV$_{VR}$) for adjusting the braking pressure ($p_{VR}$) at a front wheel brake (54), only one wheel brake circuit (RBK$_{HR}$) with a pressure modulator (RGV$_{HR}$) for adjusting the braking pressure ($p_{HR}$) at a rear wheel brake (54'), at least one control circuit (STK$_{HBZ}$, STK$_{FBZ}$) for activating both pressure modulators (RGV$_{VR}$, RGV$_{HR}$) and a control unit (94), wherein the braking pressure ($p_{HRnominal}$) in the wheel brake circuit (RBK$_{HR}$) for the rear wheel (HR) is determined as a function of the braking pressure ($p_{VRactual}$) in the wheel brake circuit (RBK$_{VR}$) for the front wheel (VR) detected by means of a pressure sensor (90) as a reference input variable, on the basis of an ideal brake force distribution characteristic stored in the control unit (94), and is adjusted by the pressure modulator (RGV$_{HR}$) in the wheel brake circuit (RBK$_{HR}$) for the rear wheel (HR).

2. A method according to claim 1, wherein the brake force distribution characteristic stored in the control unit (94) comprises two ideal brake force distribution curves ($f_{BLZ0}$, $f_{BLZ1}$), of which the one curve ($f_{BLZ0}$) is representative of an unladen vehicle while the other curve ($f_{BLZ1}$) is representative of a vehicle under maximum load.

3. A method according to claim 2, wherein a counter (BLZ$_n$) representative of the actual loading of the vehicle is produced, which, for a braking pressure ($p_{VRactual}$) detected in the wheel brake circuit (RBK$_{VR}$) for the front wheel (VR) and taking account of the two ideal brake force distribution curves ($f_{BLZ0}$, $f_{BLZ1}$), serves in calculating a pressure calculation variable ($p_{BLZ}$) which lies, in accordance with the actual loading of the vehicle, between or on one of the two ideal brake force distribution curves ($f_{BLZ0}$, $f_{BLZ1}$), wherein the braking pressure ($p_{HRnominal}$) for the rear wheel (HR) is determined as a function of the calculated pressure calculation variable ($p_{BLZ}$).

4. A method according to one of the preceding claims, wherein the measured or calculated temperature ($T_n$) of the rear wheel brake disk (62') is also taken into account in determining the braking pressure ($p_{HRnominal}$) for the rear wheel (HR), in such a way that the braking pressure ($p_{HRnominal}$) for the rear wheel (HR) is reduced when given temperature limits ($T_{limit}$, $T_{max}$) are exceeded.

5. A method according to claim 4, wherein, during calculation of the temperature of the brake disk (62') with the ignition "ON", two temperature functions ($F_1$, $F_2$) are always produced, of which the one temperature function ($F_1$) serves as an auxiliary function which, after the ignition has been turned "OFF" and "ON" again, always starts again at the last calculated temperature value ($T_{altn-1} = T_{sp}$), while the other temperature function ($F_2$) supplying the recalculated temperature value ($T_n$) always starts at zero again when the ignition is turned "ON", wherein the latter ($F_2$) processes the results ($T_{altn}$) of the first temperature function ($F_1$) in such a way that it ($F_2$) rises more sharply until the two temperature functions supply the same results (Fig. 8: at $T_x$).

6. A brake system for single-track vehicles for implementing the method according to one of the preceding claims, having

only one wheel brake circuit ($RBK_{VR}$) for the front wheel (VR), which comprises a pressure modulator ($RGV_{VR}$) for adjusting a braking pressure ($p_{VR}$) applicable to a front wheel brake (54),

only one wheel brake circuit ($RBK_{HR}$) for the rear wheel (HR), which comprises a pressure modulator ($RGV_{HR}$) for adjusting a braking pressure ($p_{HR}$) applicable to a rear wheel brake (54'),

a first control circuit ($STK_{HBZ}$), by means of which the two pressure modulators ($RGV_{VR}$, $RGV_{HR}$) may be activated,

a second control circuit ($STK_{FBZ}$), by means of which the two pressure modulators ($RGV_{VR}$, $RGV_{HR}$) may be activated, and

a control unit (94), in which an ideal brake force distribution characteristic (Fig. 6) between front wheel (VR) and rear wheel (HR) is stored and by means of which the pressure modulator ($RGV_{HR}$) in the wheel brake circuit ($RBK_{HR}$) for the rear wheel (HR) may be activated,

wherein in the wheel brake circuit ($RBK_{VR}$) for the front wheel (VR) there is provided a pressure sensor (90), by means of which the braking pressure ($p_{VRactual}$) in the wheel brake circuit ($RBK_{VR}$) for the front wheel (VR) may be detected and which is connected with the control unit (94),

wherein, by means of the braking pressure ($p_{VRactual}$) detected in the wheel brake circuit ($RBK_{VR}$) for the front wheel (VR) as a reference input variable, on the basis of the ideal brake force distribution characteristic (Fig. 6) stored in the control unit (94), a braking pressure ($p_{HRnominal}$) for the wheel brake circuit ($RBK_{HR}$) for the rear wheel (HR) may be determined, and

wherein the determined braking pressure ($p_{HRnominal}$) for the wheel brake circuit ($RBK_{HR}$) for the rear wheel (HR) may be adjusted by the pressure modulator ($RGV_{HR}$) in the wheel brake circuit ($RBK_{HR}$) for the rear wheel (HR), which is activated by the control unit (94).

7. A brake system according to claim 6, wherein each pressure modulator ($RGV_{VR}$, $RGV_{HR}$) comprises a valve body (16, 16'), which limits in controllable manner a restriction gap (18, 18') through which a hydraulic fluid is forced to flow during braking, in order to establish in a pressure chamber (10, 10') a defined dynamic pressure which may be applied to the respective wheel brake (54, 54').

8. A brake system according to claim 7, wherein the valve body (16, 16') of each pressure modulator ($RGV_{VR}$, $RGV_{HR}$) is activatable electromagnetically and hydraulically via a control piston (24, 24') for adjustment of the restriction gap (18, 18').

9. A brake system according to claim 8, wherein the control piston (24, 24') of each pressure modulator ($RGV_{VR}$, $RGV_{HR}$) may be displaced by the pressurization of a control chamber (20, 20') and/or by mechanical loading via an activating piston (82, 82') guided slidingly in an activating chamber (80, 80') and loadable hydraulically via the activating chamber (80, 80').

10. A brake system according to claim 8 or 9, wherein the control piston (24, 24') of each pressure modulator ($RGV_{VR}$, $RGV_{HR}$) may be displaced by means of a solenoid actuator consisting of an armature on the control piston (24, 24') and a solenoid (26, 26').

11. A brake system according to one of claims 6 to 10, wherein each wheel brake circuit ($RBK_{VR}$, $RBK_{HR}$) is provided with a pressure sensor (90).

12. A brake system according to one of claims 6 to 11, wherein each control circuit ($STK_{HBZ}$, $STK_{FBZ}$) is provided with a pressure sensor (90).

**Revendications**

1. Procédé de régulation de la force de freinage au niveau des roues (VR, HR) d'un véhicule monotrace, en utilisant une installation de freinage, qui comprend seulement un circuit de frein de roue ($RBK_{VR}$) avec un modulateur de pression ($RGV_{VR}$) pour régler la pression de freinage ($P_{VR}$) au niveau d'un frein de roue avant (54), seulement un circuit de frein de roue ($RBK_{HR}$) avec un modulateur de pression ($RGV_{HR}$) pour régler la pression de freinage ($P_{HR}$) au niveau d'un frein de roue arrière (54'), au moins un circuit de commande ($STK_{HBZ}$, $STK_{FBZ}$) pour commander les deux modulateurs de pression ($RGV_{VR}$, $RGV_{HR}$), ainsi qu'une unité de commande (94), procédé d'après lequel la pression de freinage ($p_{HRcons}$) dans le circuit de frein de roue ($RBK_{HR}$) pour la roue arrière (HR) est déterminée en fonction de la pression de freinage ($p_{VRréel}$) relevée au moyen d'un capteur de pression (90) dans le circuit de frein de roue ($RBK_{VR}$) pour la roue avant (VR), en tant que grandeur de référence, en se fondant sur une caractéristique de répartition de freinage idéale stockée dans l'unité de commande (94), et est réglée par le modulateur de pression ($RGV_{HR}$) dans le circuit de frein de roue ($RBK_{HR}$) pour la roue arrière (HR).

**2.** Procédé selon la revendication 1, d'après lequel la caractéristique de répartition de freinage stockée dans l'unité de commande (94) englobe deux courbes de répartition de freinage idéales ($f_{BLZ0}$, $f_{BLZ1}$), dont une courbe ($f_{BLZ0}$) est représentative pour un véhicule non chargé, tandis que l'autre courbe ($f_{BLZ1}$) est représentative pour un véhicule chargé au maximum.

**3.** Procédé selon la revendication 2, d'après lequel on forme un compteur ($BLZ_n$) représentatif pour le chargement effectif du véhicule et servant, pour une pression de freinage ($p_{VRréel}$) relevée dans le circuit de frein de roue ($RBK_{VR}$) pour la roue avant (VR), en tenant compte des deux courbes de répartition de freinage idéales ($f_{BLZ0}$, $f_{BLZ1}$), au calcul d'une grandeur de calcul de pression ($p_{BLZ}$), qui se situe, conformément au chargement effectif du véhicule, entre les deux courbes de répartition de freinage idéales ($f_{BLZ0}$, $f_{BLZ1}$) ou sur l'une d'entre-elles, la pression de freinage ($p_{HRcons}$) pour la roue arrière (HR) étant déterminée en fonction de la grandeur de calcul de pression ($p_{BLZ}$) calculée.

**4.** Procédé selon l'une des revendications précédentes, d'après lequel, lors de la détermination de la pression de freinage ($p_{HRcons}$) pour la roue arrière (HR), on prend en considération la température ($T_n$) mesurée ou calculée du disque de frein de roue arrière (62') de façon telle, que la pression de freinage ($p_{HRcons}$) pour la roue arrière (HR) soit abaissée en cas de dépassement de limites de température déterminées ($T_{limite}$, $T_{max}$).

**5.** Procédé selon la revendication 4, d'après lequel, lors du calcul de la température du disque de frein (62') avec un mode allumage "MARCHE", on forme en permanence deux fonctions de température ($F_1$, $F_2$) dont une fonction de température ($F_1$) sert de fonction auxiliaire qui, après un mode allumage "ARRET" et un nouveau mode allumage "MARCHE" reprend toujours à la valeur de température calculée en dernier lieu ($T_{ancien\_n-1} = T_{sp}$), tandis que l'autre fonction de température ($F_2$) fournissant la valeur de température ($T_n$) calculée par ailleurs, reprend toujours à nouveau à zéro pour le mode allumage "MARCHE", cette dernière ($F_2$) utilisant pour le calcul les résultats ($T_{ancien\_n}$) de la première fonction de température ($F_1$) de façon telle qu'elle ($F_2$) évolue sous une pente plus importante, jusqu'à ce que les deux fonctions de température fournissent des résultats identiques (figure 8 : en $T_x$).

**6.** Installation de freinage pour véhicules monotraces destiné à la mise en oeuvre du procédé selon l'une des revendications précédentes, comprenant

seulement un circuit de frein de roue ($RBK_{VR}$) pour la roue avant (VR), avec un modulateur de pression ($RGV_{VR}$) pour régler une pression de freinage ($p_{VR}$) pouvant être appliquée à un frein de roue avant (54),

seulement un circuit de frein de roue ($RBK_{HR}$) pour la roue arrière (HR), avec un modulateur de pression ($RGV_{HR}$) pour régler une pression de freinage ($P_{HR}$) pouvant être appliquée à un frein de roue arrière (54'),

un premier circuit de commande ($STK_{HBZ}$) à l'aide duquel il est possible de commander les deux modulateurs de pression ($RGV_{VR}$, $RGV_{HR}$),

un second circuit de commande ($STK_{FBZ}$) à l'aide duquel il est possible de commander les deux modulateurs de pression ($RGV_{VR}$, $RGV_{HR}$), et

une unité de commande (94) dans laquelle est stockée une caractéristique de répartition de freinage idéale (figure 6) entre roue avant (VR) et roue arrière (HR), et à l'aide de laquelle peut être commandé le modulateur de pression ($RGV_{HR}$) dans le circuit de frein de roue ($RBK_{HR}$) pour la roue arrière (HR),

installation de freinage

dans laquelle il est prévu dans le circuit de frein de roue ($RBK_{VR}$) pour la roue avant (VR), un capteur de pression (90) au moyen duquel il est possible de relever la pression de freinage ($p_{VRréel}$) dans le circuit de frein de roue ($RBK_{VR}$) pour la roue avant (VR), et qui est relié à l'unité de commande (94),

dans laquelle on peut déterminer, au moyen de la pression de freinage ($p_{VRréel}$) relevée dans le circuit de frein de roue ($RBK_{VR}$) pour la roue avant (VR), en tant que grandeur de référence, en se fondant sur la caractéristique de répartition de freinage idéale (figure 6) stockée dans l'unité de commande (94), une pression de freinage ($p_{HRcons}$) pour le circuit de frein de roue ($RBK_{HR}$) pour la roue arrière (HR), et

dans laquelle la pression de freinage ($p_{HRcons}$) déterminée pour le circuit de frein de roue ($RBK_{HR}$) pour la roue arrière (HR), peut être réglée par le modulateur de pression ($RGV_{HR}$) commandé par l'unité de commande (94), dans le circuit de frein de roue ($RBK_{HR}$) pour la roue arrière (HR).

**7.** Installation de freinage selon la revendication 6, dans laquelle chaque modulateur de pression ($RGV_{VR}$, $RGV_{HR}$) présente un corps d'obturation de soupape (16, 16') qui limite de manière commandée une fente d'étranglement (18, 18') traversée de manière forcée, en mode freinage, par un écoulement de fluide de pression, en vue de régler dans une chambre de pression (10, 10') une pression dynamique définie qui peut être appliquée au frein de roue respectif (54, 54').

**8.** Installation de freinage selon la revendication 7, dans laquelle le corps d'obturation de soupape (16, 16') de chaque modulateur de pression ($RGV_{VR}$, $RGV_{HR}$) peut être commandé, par l'intermédiaire d'un piston de commande (24, 24'), par voie hydraulique et par voie électromagnétique.

9. Installation de freinage selon la revendication 8, dans laquelle il est possible de faire coulisser le piston de commande (24, 24') de chaque modulateur de pression ($RGV_{VR}$, $RGV_{HR}$), par sollicitation en pression d'une chambre de commande (20, 20') et/ou par sollicitation mécanique par l'intermédiaire d'un piston pilote (82, 82') guidé de manière mobile en glissement dans une chambre pilote (80, 80') et pouvant être sollicité par voie hydraulique par l'intermédiaire de la chambre pilote (80, 80').

10. Installation de freinage selon la revendication 8 ou 9, dans laquelle il est possible de faire coulisser le piston de commande (24,24') de chaque modulateur de pression ($RGV_{VR}$, $RGV_{HR}$), au moyen d'un système d'entraînement magnétique constitué d'une armature sur le piston de commande (24, 24') et d'une bobine d'excitation (26, 26').

11. Installation de freinage selon l'une des revendications 6 à 10, dans laquelle chaque circuit de frein de roue ($RBK_{VR}$, $RBK_{HR}$) est pourvu d'un capteur de pression (90).

12. Installation de freinage selon l'une des revendications 6 à 11, dans laquelle chaque circuit de commande ($STK_{HBZ}$, $STK_{FBZ}$) est pourvu d'un capteur de pression (90).

FIG.1

EP 1 318 933 B1

FIG.2

FIG. 3

Zündung "Ein" — 100

BLZ = 0 — 102

Bestimmung BLZn
(Fig. 4, 5) — 104

$P_{VRist}$

128
$P_{BLZ0} = f_{BLZ0}(P_{VRist})$
$P_{BLZ1} = f_{BLZ1}(P_{VRist})$

130
$$P_{BLZ} = P_{BLZ0} + \frac{BLZn}{255} \cdot (P_{BLZ1} - P_{BLZ0})$$

$T_n$ — 132 — $T_n \leq T_{Grenz}$ — nein — 136 — $T_n \leq T_{max}$ — nein

ja

ja

140
$$P_{Temp} = min\left(P_{BLZ}, \left[P_{BLZ} - max\left(0, \frac{T_n - T_{Grenz}}{T_{max} - T_{Grenz}} \cdot (P_{BLZ} - P_{Tmax})\right)\right]\right)$$

$P_{Temp} = P_{BLZ}$

$P_{Temp} = min(P_{BLZ}, P_{Tmax})$ — 138

134

$P_{ABS}$ — $P_{HRsoll} = min(P_{ABS}, P_{Temp})$ — 142

Einstellung $P_{HRsoll}$ — 144

Zündung "Ein"? — ja — 146

nein

Ende — 148

FIG. 4

104

106 — Bremsvorgang mit ABS-Regelung?
112 — nur 1 Rad in der Regelung?
114 — Vorderrad VR in der ABS-Regelung?
124 — $BLZ_{n-1} = 255$ ?
126 — $BLZ_n = BLZ_{n-1} + 1$
108 — $BLZ_n = BLZ_{n-1}$

116 — Fußbremse Hinterrad HR betätigt?
120 — $BLZ_{n-1} = 0$ ?
122 — $BLZ_n = BLZ_{n-1} - 1$
118 — $BLZ_n = BLZ_{n-1}$

110 — $BLZ_n$

Ja / Nein

FIG.5

EP 1 318 933 B1

104

106
Bremsvorgang mit
ABS-Regelung ?

Nein

Ja
112
nur 1 Rad in
der Regelung ?

Nein

Ja
114
Vorderrad VR in der
ABS-Regelung ?

Nein

Ja

124
$BLZ_{n-1}$ = 255 ?

Ja

108
$BLZ_n = BLZ_{n-1}$

Nein
126
$BLZ_n = BLZ_{n-1} + 1$

120
$BLZ_{n-1} = 0$ ?

Ja

Nein
122
$BLZ_n = BLZ_{n-1} - 1$

118
$BLZ_n = BLZ_{n-1}$

110
$BLZ_n$

FIG.6

FIG.7

FIG.8

EP 1 318 933 B1